# EUROPÄISCHE PATENTSCHRIFT

(11) **EP 2 577 092 B1**
(45) Veröffentlichungstag und Bekanntmachung des Hinweises auf die Patenterteilung: **24.10.2018**
(21) Anmeldenummer: 11713294.4
(22) Anmeldetag: 11.04.2011
(51) Int. Cl.: F16F 15/14

(54) **TORSIONSSCHWINGUNGSDÄMPFERANORDNUNG UND SCHWINGUNGSDÄMPFEREINRICHUTUNG, INSBESONDERE IN EINER TORSIONSSCHWINGUNGSDÄMPFERANORDNUNG**
TORSION VIBRATION DAMPER ASSEMBLY AND VIBRATION DAMPER DEVICE, IN PARTICULAR IN A TORSION VIBRATION DAMPER ASSEMBLY
AGENCEMENT AMORTISSEUR DE VIBRATIONS TORSIONNELLES ET DISPOSITIF AMORTISSEUR DE VIBRATIONS, EN PARTICULIER DANS UN AGENCEMENT AMORTISSEUR DE VIBRATIONS TORSIONNELLES

(30) Priorität: 28.05.2010 DE 102010029464
(43) Veröffentlichungstag der Anmeldung: 10.04.2013
(60) Teilanmeldung: 13170649.1
(73) Patentinhaber: ZF Friedrichshafen AG, 88046 Friedrichshafen (DE)
(72) Erfinder: SCHIERLING, Bernhard, 97273 Kürnach (DE); TRAUT, Michael, 98693 Ilmenau (DE); ZINSSMEISTER, Horst, 67663 Kaiserslautern (DE); FELDHAUS, Reinhard, 97502 Euerbach (DE); KOPP, Mathias, 96050 Bamberg (DE); ORLAMÜNDER, Andreas, 97453 Schonungen (DE)
(86) Internationale Anmeldenummer: PCT/EP2011/055596
(87) Internationale Veröffentlichungsnummer: WO 2011/147632

(56) Entgegenhaltungen:
- EP-A2- 1 744 074
- DE-A1- 10 005 545
- DE-A1- 10 013 652
- DE-A1- 10 224 874
- DE-A1-102004 011 830
- DE-A1-102008 005 138
- DE-A1-102008 059 297
- DE-A1-102009 042 825
- DE-A1-102009 051 724

## Beschreibung

Die vorliegende Erfindung betrifft eine Torsionsschwingungsdämpferanordnung für den Antriebsstrang eines Fahrzeugs, umfassend eine mit einem Antriebsorgan zu koppelnde Primärseite und eine gegen die Wirkung einer Dämpferelementenanodnung um eine Drehachse bezüglich der Primärseite drehbare Sekundärseite, wobei die Primärseite und die Sekundärseite Umfangsabstützbereiche für Dämpferelemente der Dämpferelementenanordnung aufweisen, wobei an der Sekundärseite eine Schwingungsdämpfereinrichtung mit einem Auslenkungsmassenträger und wenigstens einer an dem Auslenkungsmassenträger aus einer Grundlage mit maximalem Abstand zur Drehachse in eine Auslenkungslage mit geringerem Abstand zur Drehachse auslenkbar getragenen Auslenkungsmasse vorgesehen ist, und wobei die Sekundärseite wenigstens ein Umfangsabstützbereiche aufweisendes Umfangsabstützelement und ein sekundärseitiges, vorzugsweise ringscheibenartiges, Masseelement aufweist. Weiterhin umfasst der Auslenkungsmassenträger zwei in Richtung der Drehachse in Abstand zueinander angeordnete, miteinander fest verbundene und zwischen sich die wenigstens eine Auslenkungsmasse aufnehmende Trägerscheiben.

Eine derartige Torsionsschwingungsdämpferanordnung ist aus der DE 10 2009 042 825 A1, Fig. 3, bekannt. Die Dämpferelementenanordnung verfügt über Dämpferelemente, die in Reihenschaltung zueinander stehen, und radial ineinander angeordnet sind. Die Abtriebsseite des radial inneren Dämpferelementes verfügt über Deckscheiben, die zusammen als abtriebsseitiges Umfangsabstützelement wirksam und mit einer Nabe drehfest sind, die mittels einer Vernietung mit den Trägerscheiben des Auslenkungsmassenträgers verbunden ist. Während die Sekundärseite über die am Auslenkungsmassenträger aufgenommenen Auslenkungsmassen verfügt, sind weitere Masseelemente an der Primärseite aufgenommen, beispielsweise im Bereich des Außenumfangs der Primärseite.

Die DE 10 2009 042 825 A1 lässt offen, in welcher Anzahl radial innere Dämpferelemente und somit diesen Dämpferelementen zugeordnete Umfangsabstützbereiche an den Deckscheiben des Umfangsabstützelementes vorgesehen sind. Üblicherweise sind bei derartigen Konstruktionen über den Umfang zumindest drei Dämpferelemente in hierfür vorgesehenen Aussparungen der Deckscheiben sowie einer axial zwischen den beiden Deckscheiben angeordneten Zwischendämpferscheibe vorgesehen. Es ist daher davon auszugehen, dass die Deckscheiben ebenso wie die Zwischendämpferscheibe zumindest im Wesentlichen ringförmig ausgebildet sind, und zumindest drei Umfangsabstützbereiche für die Dämpferelemente aufweisen.

Bei der DE 10 2009 042 825 A1 sind im Primärflansch der Primärseite Durchgänge ausgebildet sind, welche zum Durchgang von Schraubbolzen oder dergleichen dienen, die zur Festlegung des Torsionsschwingungsdämpfers beispielsweise an einer Kurbelwelle einer Brennkraftmaschine dienen. Solche Schraubbolzen oder dergleichen sind von der Sekundärseite aus mittels Öffnungen in der Nabe zugänglich.

Durch die DE 102 24 874 A1 sowie die DE 10 2008 005 138 A1 ist jeweils eine Torsionsschwingungsdämpferanordnung bekannt, bei welcher das Umfangsabstützelement mit zwei Umfangsabstützbereichen ausgebildet ist, die in Umfangsrichtung um näherungsweise 180° zueinander beabstandet sind. Das Umfangsabstützelement ist ringförmig ausgebildet, und dient in einer Zweitfunktion als Auslenkungsmassenträger, indem beidseits des Umfangsabstützelementes Auslenkungsmassen vorgesehen sind. Das Umfangsabstützelement ist mittels Verbindungselementen an einem ringscheibenartigen Masseelement befestigt, das radial innen auf einer primärseitigen Nabe angeordnet ist.

Bei DE 102 24 874 A1 sind ebenso wie bei DE 10 2008 005 138 A1 im jeweiligen Primärflansch der Primärseite Durchgänge ausgebildet, welche zum Durchgang von Schraubbolzen oder dergleichen dienen, die zur Festlegung des Torsionsschwingungsdämpfers beispielsweise an einer Kurbelwelle einer Brennkraftmaschine dienen. Solche Schraubbolzen oder dergleichen sind von der Sekundärseite aus mittels Öffnungen im ringscheibenförmigen Masseelement zugänglich.

Aus der DE 196 54 915 A1 ist eine Schwingungsdämpfereinrichtung bekannt, bei welcher eine Schwingungsdämpfung dadurch erreicht wird, dass eine oder mehrere Auslenkungsmassen bei Auftreten von Drehungleichförmigkeiten ausgehend von einer Grundlage im Fliehpotential, also entgegen der die Auslenkungsmasse nach radial außen belastenden Fliehkraft, nach radial innen ausgelenkt wird. Um diese Auslenkung zu realisieren, sind in jeder Auslenkungsmasse zwei in Umfangsrichtung nebeneinander liegende erste Führungsbahnen gebildet, welche eine im Wesentlichen nach radial außen gerichtete und auch nach radial außen gekrümmte Führungsfläche aufweisen. Ein Führungsbahnscheitel liegt in Umfangsrichtung in einem zentralen Bereich jeder ersten Führungsbahn und stellt den am weitesten radial innen liegenden Bereich jeder ersten Führungsbahn bereit. In Zuordnung zu jeder ersten Führungsbahn in einer Auslenkungsmasse ist am Auslenkungsmassenträger eine zweite Führungsbahn vorgesehen. Diese weist eine nach radial innen gerichtete und auch nach radial innen gekrümmte Führungsfläche auf. Ein Führungsbahnscheitel jeder zweiten Führungsbahn stellt somit den am weitesten radial außen liegenden Bereich jeder zweiten Führungsbahn bereit. In Zuordnung zu jedem Paar aus erster Führungsbahn und zweiter Führungsbahn ist ein walzenartiger Führungskörper vorgesehen. Dieser ist mit einem Außenumfangsflächenbereich in Kontakt mit der ersten Führungsbahn und einem anderen Außenumfangsflächenbereich in Kontakt mit der zugeordneten zweiten Führungsbahn. Durch die einander gegenläufige Krümmung der beiden Führungsbahnen jedes Führungsbahnpaares wird erreicht, dass fliehkraftbedingt der Führungskörper sich jeweils im Bereich der beiden Führungsbahnscheitel positionieren wird, so dass bei nicht vorhandener Auslenkung aus der Grundlage jede Auslenkungsmasse ihre radial äußerste Position einnimmt. Bei auftretenden Drehungleichförmigkeiten bewegen sich die Auslenkunsmassen bezüglich des Auslenkungsmassenträgers aufgrund der in Umfangsrichtung wirkenden Drehbeschleunigung in Umfangsrichtung. Dabei bewegen sich die Führungskörper an dem mit diesen zusammen wirkenden Führungsbahnpaar mit der Folge, dass die Auslenkungsmasse sich bei ihrer Umfangsbewegung auch nach radial innen bewegt und dabei potentielle Energie im Fliehpotential aufnimmt.

Eine derartige Schwingungsdämpfereinrichtung wird allgemein auch als drehzahladaptiver Tilger bezeichnet. Sie besitzt keine feste Resonanzstelle, sondern kann auf eine Anregungsordnung abgestimmt werden, welche sich beispielsweise mit variierender Drehzahl auch im Drehzahlbereich eines Antriebsstrangs bzw. Antriebsaggregats verschiebt.

Die DE 196 54 894 A1 offenbart eine Torsionsschwingungsdämpferanordnung der eingangs genannten Art, welche beispielsweise als Zweimassenschwungrad oder in einer Kupplungsscheibe ausgeführt sein kann. An einer Sekundärseite der Torsionsschwingungsdämpferanordnung ist eine Schwingungsdämpfereinrichtung der vorangehend beschriebenen Art, also eine mit durch Drehungleichförmigkeiten zur Oszillation anregbaren Auslenkungsmassen aufgebaute Schwingungsdämpfereinrichtung vorgesehen. Durch die Kombination einer mit Dämpferelementen, im Allgemeinen bereitgestellt durch Federn, wirkenden Torsionsschwingungsdämpferanordnung einerseits mit einer als drehzahladaptiver Tilger ausgebildeten Schwingungsdämpfereinrichtung andererseits, welche insbesondere an der Sekundärseite der Torsionsschwingungsdämpferanordnung vorgesehen ist, wird eine durch die Kombination zweier Schwingungsdämpfermechanismen erreichte deutlich verbesserte Verringerung von in einem Antriebsstrang auftretenden bzw. sich ausbreitenden Drehungleichförmigkeiten erreicht.

Es ist die Aufgabe der vorliegenden Erfindung, eine Torsionsschwingungsdämpferanordnung, insbesondere für den Antriebsstrang eines Fahrzeugs vorzusehen, welche bei kompakter Bauweise eine sehr gute Entkopplungsgüte zwischen Primärseite und Sekundärseite aufweist.

Diese Aufgabe wird gelöst durch eine Torsionsschwingungsdämpferanordnung für den Antriebsstrang eines Fahrzeugs, umfassend eine mit einem Antriebsorgan zu koppelnde Primärseite und eine gegen die Wirkung einer Dämpferelementenanodnung um eine Drehachse bezüglich der Primärseite drehbare Sekundärseite, wobei die Primärseite und die Sekundärseite Umfangsabstützbereiche für Dämpferelemente der Dämpferelementenanordnung aufweisen, wobei an der Sekundärseite eine Schwingungsdämpfereinrichtung mit einem Auslenkungsmassenträger und wenigstens einer an dem Auslenkungsmassenträger aus einer Grundlage mit maximalem Abstand zur Drehachse in eine Auslenkungslage mit geringerem Abstand zur Drehachse auslenkbar getragenen Auslenkungsmasse vorgesehen ist, wobei die Sekundärseite wenigstens ein Umfangsabstützbereiche aufweisendes Umfangsabstützelement und ein sekundärseitiges, vorzugsweise ringscheibenartiges, Masseelement aufweist, und wobei der Auslenkungsmassenträger zwei in Richtung der Drehachse in Abstand zueinander angeordnete, miteinander fest verbundene und zwischen sich die wenigstens eine Auslenkungsmasse aufnehmende Trägerscheiben umfasst.

Dabei sind weiter erste Verbindungselemente vorgesehen, durch welche das sekundärseitige Masseelement mit dem wenigstens einen Umfangsabstützelement einerseits und dem Auslenkungsmassenträger andererseits verbunden ist.

Durch die feste Verbindung dreier Baugruppen vermittels der ersten Verbindungselemente wird einerseits eine kompakte Bauweise unterstützt. Andererseits wird vermieden, dass der Auslenkungsmassenträger selbst zur Übertragung des in einem Antriebsstrang auftretenden Drehmoments ausgebildet sein muss. Dies führt zu einer höheren Gestaltungsfreiheit bei der Auslegung des Auslenkungsmassenträgers, insbesondere hinsichtlich seiner Dimensionierung und seiner Stabilität.

Das Umfangsabstützelement zeigt sich jeweils balkenartig ausgestaltet mit zwei in einem Winkelabstand von näherungsweise 180° zueinander angeordneten Umfangsabstützbereichen. In einem zentralen Bereich weist dieses Umfangsabstützelement jeweils einen ringartigen Abschnitt auf. An diesem ringartigen Abschnitt kann jeweils ein zylindrischer Ansatz vorgesehen sein, welcher der radialen Lagerung verschiedener Baugruppen, beispielsweise der Sekundärseite bezüglich der Primärseite oder aber auch der Sekundärseite bezüglich einer Abtriebswelle dienen kann. In dem ringartigen Abschnitt können weiterhin Öffnungen gebildet sein, welche zum Durchgang von der Festlegung beispielsweise an einer Kurbelwelle dienenden Schraubbolzen oder dergleichen dienen können.

Das balkenartige Umfangsabstützelement weist in seinem radial inneren Bereich einen mit Verzahnung versehenen Nabenbereich auf. Ferner trägt das Umfangsabstützelement einen beispielsweise integral angeformten oder aber auch separat daran festgelegten ringartigen Abstützbereich. Das Umfangsabstützelement und damit die gesamte Sekundärseite der Torsionsschwingungsdämpferanordnung stützen sich somit in Axialrichtung bezüglich der Primärseite ab.

Eine sehr stabile Anordnung kann dadurch geschaffen werden, dass ein zwei Umfangsabstützbereiche aufweisendes Umfangsabstützelement vorgesehen ist.

Die Verbindungsstabilität insbesondere auch zwischen den Umfangsabstützbereichen und dem sekundärseitigen Masseteil kann weiter dadurch erhöht werden, dass in Zuordnung zu jedem Umfangsabstützbereich eine Mehrzahl erster Verbindungselemente vorgesehen ist.

Die ersten Verbindungselemente sind vorzugsweise als Nietbolzen ausgebildet.

Gemäß einem weiteren Aspekt wird insbesondere zum Aufbau der Schwingungsdämpfereinrichtung vorgeschlagen, dass an der wenigstens einen Auslenkungsmasse wenigstens eine erste Führungsbahn mit einer im Wesentlichen nach radial außen gerichteten Führungsfläche und in Zuordnung zu der wenigstens einen ersten Führungsbahn in der wenigstens einen Auslenkungsmasse im Auslenkungsmassenträger eine zweite Führungsbahn mit einer im Wesentlichen nach radial innen gerichteten Führungsfläche vorgesehen sind, wobei ein vorzugsweise als Rollkörper ausgebildeter Führungskörper bei Auslenkung der wenigstens einen Auslenkungsmasse aus der Grundlage entlang der ersten Führungsbahn und der zweiten Führungsbahn bewegbar ist. Mit diesem Aufbau wird eine gute Abkapselung der wenigstens einen Auslenkungsmasse erreicht, so dass diese gegen äußere Einflüsse, insbesondere auch Verunreinigungen geschützt ist.

Die Verbindung des Auslenkungsmassenträgers mit den Verbindungsbereichen bzw. dem sekundärseitigen Masseteil kann beispielsweise dadurch erfolgen, dass wenigstens eine der Trägerscheiben durch erste Verbindungselemente mit wenigstens einem Umfangsabstützelement und dem sekundärseitigen Masseteil fest verbunden ist.

Insbesondere dann, wenn die ersten Verbindungselemente als Nietbolzen ausgebildet sind, kann zum Erhalten eines Zugriffs auf dieselben zur Herstellung der Verbindung vorgesehen sein, dass die Primärseite in Zuordnung zu den ersten Verbindungselementen Aussparungen aufweist.

Der strukturelle Zusammenhalt des Auslenkungsmassenträgers kann beispielsweise dadurch realisiert werden, dass die Trägerscheiben durch zweite Verbindungselemente, vorzugsweise Nietbolzen, vorzugsweise an in Umfangsrichtung bezüglich der ersten Verbindungselemente in Abstand liegenden Positionen, miteinander fest verbunden sind. Dies bedeutet, dass nicht notwendigerweise die ersten Verbindungselemente auch dazu eingesetzt werden müssen, die beiden Trägerscheiben miteinander zu verbinden.

Um im Antriebsstrang auftretende Achsversätze bzw. Achsneigungen kompensieren zu können, wird weiter vorgeschlagen, dass die Primärseite Taumelbewegungen bezüglich der Drehachse zulassend ausgebildet ist oder/und mit einem Taumelbewegungen zulassenden Kopplungselement zur Ankopplung an ein Antriebsorgan verbunden ist.

Die vorliegende Erfindung wird nachfolgend mit Bezug auf die beiliegenden Figuren detailliert beschrieben, wobei die Fig. 1 bis 19 lediglich den technologischen Hintergrund und nicht die eigentliche Erfindung behandeln. Es zeigt:
- Fig. 1: eine Schwingungsdämpfereinrichtung zur Integration in eine Torsionsschwingungsdämpferanordnung;
- Fig. 2: die Schwingungsdämpfereinrichtung der Fig. 1 bei offenem Auslenkungsmassenträger;
- Fig. 3: eine Axialansicht der Schwingungsdämpfereinrichtung der Fig. 1, betrachtet von der linken Seite her;
- Fig. 4: eine Axialansicht der Schwingungsdämpfereinrichtung der Fig. 1, bei weggelassener linker Trägerscheibe;
- Fig. 5: eine Längsschnittansicht der Schwingungsdämpfereinrichtung der Fig. 1;
- Fig. 6: eine perspektivische Ansicht der rechten Trägerscheibe der Schwingungsdämpfereinrichtung der Fig. 1;
- Fig. 7: eine perspektivische Ansicht der linken Trägerscheibe der Schwingungsdämpfereinrichtung der Fig. 1;
- Fig. 8: ein Umfangsabstützelement;
- Fig. 9: eine Distanzscheibe;
- Fig. 10: eine perspektivische Ansicht einer Auslenkungsmasse;
- Fig. 11: eine Schnittansicht der Auslenkungsmasse der Fig. 10;
- Fig. 12: eine perspektivische Ansicht eines Führungskörpers für eine Auslenkungsmasse;
- Fig. 13: einen ringartigen Bewegungsanschlag;
- Fig. 14: den ringartigen Bewegungsanschlag der Fig. 13 in Kombination mit einem elastischen Element;
- Fig. 15: eine Axialansicht eines Auslenkungsmassenträgers mit einem daran getragenem sekundärseitigen Masseteil;
- Fig. 16: eine Axialansicht eines Auslenkungsmassenträgers, von der anderen axialen Seite betrachtet;
- Fig. 17: eine Axialansicht einer Torsionsschwingungsdämpferanordnung bei offen dargestelltem Auslenkungsmassenträger;
- Fig. 18: eine Teil-Axialschnittansicht einer Torsionsschwingungsdämpferanordnung mit einer Schwingungsdämpfereinrichtung;
- Fig. 19: eine der Fig. 18 entsprechende Ansicht, geschnitten in einer anderen Radialebene;
- Fig. 20: eine Teilschnittdarstellung einer Schwingungsdämpfereinrichtung;
- Fig. 21: eine Teilschnittdarstellung einer Schwingungsdämpfereinrichtung;
- Fig. 22: eine Teilschnittdarstellung einer Schwingungsdämpfereinrichtung;
- Fig. 23: eine Längsschnittansicht eines Führungskörpers;
- Fig. 24: eine Längsschnittansicht eines Führungskörpers;
- Fig. 25: eine Teilschnittdarstellung einer Schwingungsdämpfereinrichtung;
- Fig. 26: eine Teilschnittdarstellung einer Schwingungsdämpfereinrichtung;
- Fig. 27: eine Teilschnittdarstellung einer Schwingungsdämpfereinrichtung;
- Fig. 28: eine Axialansicht einer Auslenkungsmasse;
- Fig. 29: ein Umfangsabstützelement;
- Fig. 30: eine Axialansicht einer Auslenkungsmasse;
- Fig. 31: eine Axialansicht einer Auslenkungsmasse;
- Fig. 32: eine Axialansicht einer Trägerscheibe eines Auslenkungsmassenträgers;
- Fig. 33: eine Teil-Axialschnittansicht einer Schwingungsdämpfereinrichtung;
- Fig. 34: eine Teil-Axialschnittansicht einer Schwingungsdämpfereinrichtung;
- Fig. 35: eine Axialansicht einer Torsionsschwingungsdämpferanordnung mit einer Schwingungsdämpfereinrichtung;
- Fig 36.: eine Teil-Axialschnittansicht einer Torsionsschwingungsdämpferanordnung mit einer Schwingungsdämpfereinrichtung;
- Fig. 37: eine Axialschnittansicht einer Torsionsschwingungsdämpferanordnung mit einer Schwingungsdämpfereinrichtung;
- Fig. 38: eine perspektivische Ansicht einer Trägerscheibe;
- Fig. 39: eine perspektivische Ansicht einer Trägerscheibe;
- Fig. 40: eine perspektivische Ansicht einer Auslenkungsmasse;
- Fig. 41: die Auslenkungsmasse der Fig. 40 in Axialansicht;
- Fig. 42: eine Schnittansicht der Auslenkungsmasse der Fig. 41, geschnitten längs einer Linie XLII-XLII;
- Fig. 43: ein Umfangsabstützelement mit zwei Umfangsabstützbereichen;
- Fig. 44: ein alternativ ausgestaltetes Umfangsabstützelement mit zwei Umfangsabstützbereichen;
- Fig. 45: ein alternativ ausgestaltetes Umfangsabstützelement mit zwei Umfangsabstützbereichen;
- Fig. 46: ein Umfangsabstützelement mit einem Umfangsabstützbereich;
- Fig. 47: eine Auslenkungsmase mit drei Auslenkungsmassenteilen;
- Fig. 48: eine perspektivische Darstellung eines Auslenkungsmassenträgers;
- Fig. 49: den Auslenkungsmassenträger der Fig.48 in Teil-Axialschnittansicht;
- Fig. 50: eine Axialansicht einer Schwingungsdämpfereinrichtung mit teilweise weggebrochener Trägerscheibe;
- Fig. 51: eine perspektivische Ansicht der Schwingungsdämpfereinrichtung der Fig. 50;
- Fig.52: eine perspektivische Darstellung einer Trägerscheibe eines Auslenkungsmassenträgers;
- Fig.53: eine Axialschnittdarstellung einer Schwingungsdämpfereinrichtung;
- Fig.54: eine Axialschnittdarstellung einer Schwingungsdämpfereinrichtung;
- Fig.55: eine Axialansicht einer Auslenkungsmasse;
- Fig.56: eine perspektivische Ansicht der Auslenkungsmasse der Fig. 55;
- Fig. 57: eine Schnittansicht der Auslenkungsmasse der Fig. 55, geschnitten längs einer Linie LVII-LVII in Fig. 55;
- Fig. 58: eine Axialansicht einer Auslenkungsmasse;
- Fig. 59: eine perspektivische Darstellung der Auslenkungsmasse der Fig. 58;
- Fig. 60: eine Schnittdarstellung der Auslenkungsmasse der Fig. 58, geschnitten längs einer Linie LX-LX;
- Fig. 61: eine Teil-Axialschnittdarstellung einer Torsionsschwingungsdämpferanordnung mit einer Schwingungsdämpfereinrichtung;
- Fig. 62: eine Teil-Axialschnittdarstellung einer Torsionsschwingungsdämpferanordnung mit einer Schwingungsdämpfereinrichtung;
- Fig. 63: eine Teil-Axialschnittdarstellung einer Torsionsschwingungsdämpferanordnung mit einer Schwingungsdämpfereinrichtung;
- Fig. 64: eine Teil-Axialschnittdarstellung einer Torsionsschwingungsdämpferanordnung mit einer Schwingungsdämpfereinrichtung;
- Fig. 65: eine Teil-Axialschnittdarstellung einer Torsionsschwingungsdämpferanordnung mit einer Schwingungsdämpfereinrichtung;
- Fig. 66: eine Teil-Axialschnittdarstellung einer Torsionsschwingungsdämpferanordnung mit einer Schwingungsdämpfereinrichtung;
- Fig. 67: ein Umfangsabstützelement mit zwei Umfangsabstützbereichen für die Torsionsschwingungsdämpferan oder Fig.66;
- Fig. 68: den radial inneren Bereich einer Primärseite einer Torsionsschwingungsdämpferanordnung;
- Fig. 69: eine Axialschnittansicht einer Torsionsschwingungsdämpferanordnung mit einer Schwingungsdämpfereinrichtung;
- Fig. 70: eine Teil-Axialschnittdarstellung einer Torsionsschwingungsdämpferanordnung mit einer Schwingungsdämpfereinrichtung.

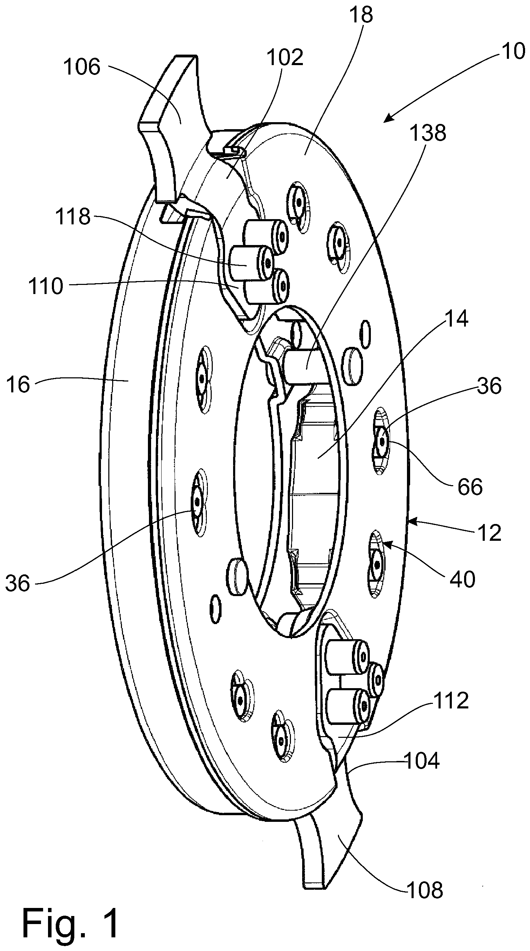

Mit Bezug auf die Fig. 1 bis 19 wird nachfolgend eine Ausgestaltungsform einer Torsionsschwingungsdämpferanordnung bzw. einer Schwingungsdämp fereinrichtung für eine derartige Torsionsschwingungsdämpferanordnung, beispielsweise aufgebaut nach dem Prinzip eines Zweimassenschwungrads, beschrieben.

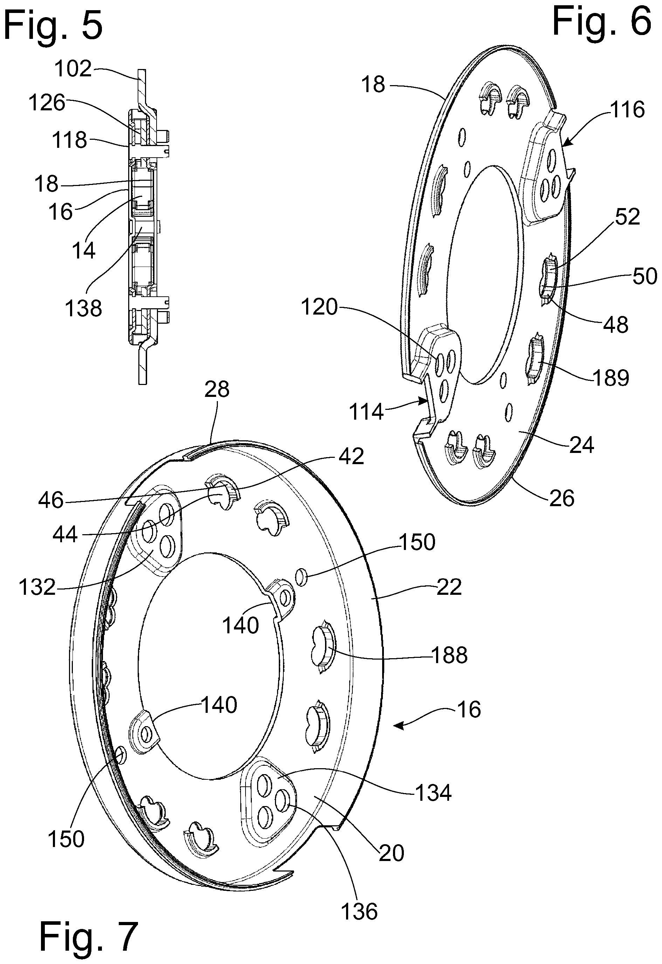

Die Fig. 1 zeigt in perspektivischer Darstellung eine Schwingungsdämpfereinrichtung 10, welche mit einem Auslenkungsmassenträger 12 und einer Mehrzahl von darin angeordneten und bezüglich diesem auslenkbaren Auslenkungsmassen 14 aufgebaut ist. Der Auslenkungsmassenträger 12 umfasst zwei beispielsweise aus Blechmaterial aufgebaute Trägerscheiben 16, 18. Die in Fig. 1 links dargestellte und beispielsweise einem Antriebsaggregat näher positionierte Trägerscheibe 16, welche auch in Fig. 7 gezeigt ist, weist einen näherungsweise radial sich erstreckenden Bereich 20 und radial außen daran anschließend einen Außenumfangswandungsbereich 22 auf. Entsprechend weist auch die in Fig. 1 rechts und beispielsweise einer Getriebeanordnung näher positionierte Trägerscheibe 18 einen radial sich erstreckenden Bereich 24 und einen vergleichsweise kurzen, bundartigen Außenumfangswandungsbereich 26 auf. In zusammengesetztem Zustand, wie er in Fig. 1 dargestellt ist, übergreift der bundartig ausgestaltete Außenumfangswandungsbereich 26 der Trägerscheibe 18 den axialen Endbereich des Außenumfangswandungsbereichs 22 und liegt dabei beispielsweise einem Radialbund 28 benachbart. Die beiden Trägerscheiben 16, 18 können in diesem radial äußeren Bereich, im welchem die beiden Außenumfangswandungsbereiche 26, 22 einander übergreifen, beispielsweise durch Verschweißung miteinander verbunden sein, um die beiden Trägerscheiben 16, 18 des Auslenkungsmassenträgers fest miteinander zu koppeln. Diese Kopplung kann aber, wie im Folgenden noch beschrieben, alternativ oder zusätzlich auch in anderer Weise erfolgen.

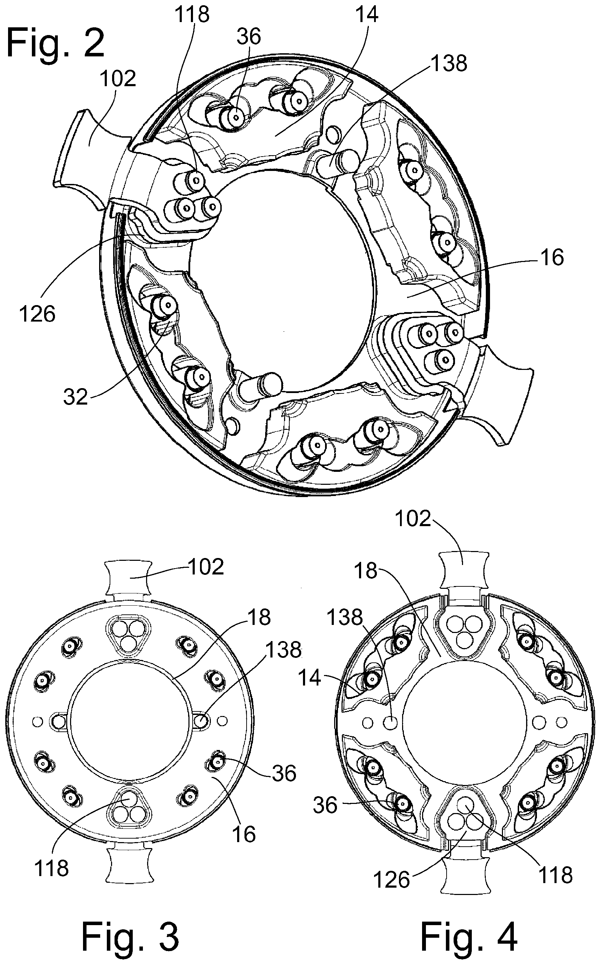

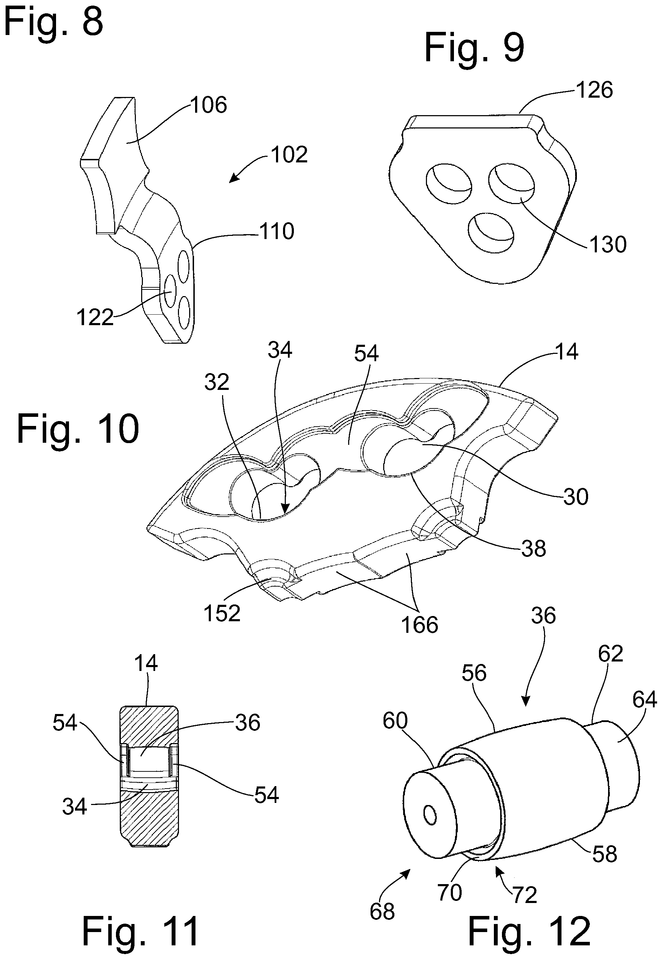

In dem vom Auslenkungsmassenträger 12 umschlossenen Volumenbereich sind in Umfangsrichtung aufeinander folgend, wie beispielsweise auch in den Fig. 2 und 4 zu erkennen, vier Auslenkungsmassen 14 angeordnet. In jeder dieser Auslenkungsmassen 14 sind, wie die Fig. 10 dies zeigt, nebeneinander liegend zwei näherungsweise nierenartige Öffnungen 30 gebildet. Eine diese Öffnungen nach radial innen hin begrenzende und im Wesentlichen nach radial außen gekrümmte Fläche 32 jeder Öffnung 30 bildet eine erste Führungsbahn 34 für einen beispielsweise in Fig. 12 perspektivisch dargestellten, walzenartigen Führungskörper 36. In jeder Auslenkungsmasse 14 sind zwei derartige, nach radial außen gekrümmte und in ihrem Umfangsmittenbereich jeweils einen Führungsbahnscheitel 38 aufweisende erste Führungsbahnen 34 vorgesehen.

In Zuordnung zu jeder ersten Führungsbahn 34 ist am Auslenkungsmassenträger 12 jeweils eine zweite Führungsbahn 40 vorgesehen. Jede zweite Führungsbahn 40 umfasst zwei Führungsbahnabschnitte, wobei ein Führungsbahnabschnitt 42 an einer eine jeweilige Öffnung 44 in der Trägerscheibe 16 nach radial außen begrenzenden und nach radial innen gekrümmten Führungsfläche 46 gebildet ist. Ein zweiter Abschnitt 48 jeder zweiten Führungsbahn 40 ist an einer eine jeweilige Öffnung 50 nach radial außen begrenzenden und nach radial innen gekrümmten Führungsfläche 52 der Trägerscheibe 18 gebildet. Die beiden Führungsbahnabschnitte 42, 48 einer jeweiligen zweiten Führungsbahn 40 liegen einander axial gegenüber und sind zueinander in Umfangsrichtung ausgerichtet.

Man erkennt in den Fig. 6 und 7, dass die Führungsbahnabschnitte 42, 44 im Wesentlichen an zum Inneren des Auslenkungsmassenträgers hin sich erstreckenden Ausformungen 188, 189 der jeweiligen radial sich erstreckenden Bereiche 20, 24 der Trägerscheiben 16, 18 gebildet sind. Dies führt im Vergleich zu dem mit geringerer Dicke ausgebildeten Aufbaumaterial der Trägerscheiben 16, 18 zu einer axial vergleichsweise breiten Führungsfläche 46 bzw. 52.

Um im Zusammenbauzustand ein gegenseitiges Stören der Auslenkungsmassen 14 mit den axialen Ausformungen 188, 189 der Trägerscheiben 16, 18, an welchen die Führungsflächen 46, 52 bereitgestellt sind, zu vermeiden, weisen die Auslenkungsmassen 14 im Angrenzungsbereich an die Öffnungen 30 Vertiefungen 54 auf. Diese sind so geformt, dass die axialen Ausformungen 188, 189 in diesen Vertiefungen 54 aufgenommen werden können und bei der Bewegung der Auslenkungsmassen 14 bezüglich der Trägerscheiben 16, 18 mit diesen im Wesentlichen nicht in Kontakt treten.

Der in Fig. 12 dargestellte walzenartige Führungskörper weist eine Außenumfangsfläche 58 mit einem zentralen Außenumfangsflächenbereich 58 auf, welcher in Kontakt tritt mit der Führungsfläche 32 bzw. einer ersten Führungsbahn 34 einer Auslenkungsmasse 14. An den axialen Endbereichen des Führungskörpers 36 sind Abschnitte 60, 62 eines weiteren Außenumfangsflächenbereichs 64 vorgesehen, welche jeweils in Konkakt stehen mit den Führungsflächen 46, 52 bzw. den Abschnitten 42, 48 einer zweiten Führungsbahn 40. Die Führungskörper 36 können sich somit durch Abrollbewegung entlang der jeweiligen mit diesen zusammenwirkenden ersten Führungsbahn 34 und zweiten Führungsbahn 40 bewegen.

Im Rotationsbetrieb werden die Auslenkungsmassen 14 sich fliehkraftbedingt in einem Zustand minimaler potentieller Energie im Fliehpotential, also in einer Positionierung möglichst weit radial außen anordnen. Dies bedeutet, dass die Führungskörper 36 mit ihrem Außenumfangsflächenbereich 56 sich im Bereich der Führungsbahnscheitel 38 einer jeweiligen ersten Führungsbahn 34 positionieren werden. Die Abschnitte 62, 60 des mit einer jeweiligen ersten Führungsbahn 40 zusammenwirkenden Außenumfangsflächenbereichs 64 werden sich gleichermaßen in einem Scheitelbereich 66 der zugehörigen zweiten Führungsbahn 40, also am radial äußersten Bereich der zweiten Führungsbahn 40, positionieren. Bei Auftreten von Drehungleichförmigkeiten, welche zu Umfangsbeschleunigungen der Auslenkungsmassen 14 führen, bewegen sich die Auslenkungsmassen 14 unter Abrollbewegung der diese radial stützenden Führungskörper 36 in Umfangsrichtung bezüglich des Auslenkungsmassenträgers 12. Durch die Krümmung der ersten Führungsbahnen 34 und der zweiten Führungsbahnen 40 führt dies zwangsweise zu einer Verlagerung nach radial innen, wobei die Auslenkungsmassen 14 potentielle Energie aufnehmen und dabei zum Abbau von Schwingungsenergie, also kinetischer Energie, beitragen. Bei im Wesentlichen periodischer Anregung können die Auslenkungsmassen 14 eine oszillierende Bewegung im Fliehpotential ausführen und somit eine der Schwingungsanregung entgegenwirkende Gegenbewegung durchführen.

Die Fig. 11 und 12 zeigen, dass die Außenumfangsfläche 58 der Führungskörper 36 insbesondere im Außenumfangsflächenbereich 56 in axialer Richtung, also zwischen den axialen Endbereichen eines jeweiligen Führungskörpers 36, konvex, also nach außen bauchig gewölbt ist. In entsprechender Weise ist die Führungsfläche 32, welche die zugeordnete erste Führungsbahn 34 bereitstellt, zwischen den axialen Endbereichen der Auslenkungsmasse 14 konkav, also nach innen bauchig gewölbt, ausgebildet. Durch Zusammenwirken dieser beiden gewölbten Flächen wird eine erste Axialzentrieranordnung 68 gebildet, welche dafür sorgt, dass die Auslenkungsmassen 14 eine definierte axiale Positionierung bezüglich der Führungskörper 36 und damit des Auslenkungsmassenträgers 12 einnehmen.

Weiter erkennt man in Fig. 12, dass im Übergangsbereich zwischen dem Außenumfangsflächenbereich 56 und den Abschnitten 60, 62 des Außenumfangsflächenbereichs 64 an den Führungskörpern 36 jeweilige Radialstufen 70 gebildet sind. Diese Radialstufen 70 bilden in Zusammenwirkung mit diesen axial gegenüberliegenden Oberflächenbereichen der Trägerscheiben 16, 18 eine zweite Radialzentrieranordnung 72, welche dafür sorgt, dass die Führungskörper 36 in definierter axialer Positionierung bezüglich des Auslenkungsmassenträgers 12 gehalten sind. Zusammen bewirken also die beiden Axialzentrieranordnungen 68, 72, dass die Auslenkungsmassen 14 definiert zwischen den beiden Trägerscheiben 16, 18 gehalten sind und bei ihrer Auslenkungsbewegung möglichst nicht in Reibkontakt damit treten.

Bei der in Fig. 12 erkennbaren Radialschulter 70 ist im radial inneren Bereich derselben, also dort, wo diese an den Abschnitt 60 des Außenumfangsflächenbereichs 64 angrenzt, ein axialer Rücksprung gebildet. Dieser vermeidet Radien beim Übergang zum Abschnitt 60 und ermöglicht somit eine exaktere, flächige Axialabstützung des Führungskörpers 36 am zugeordneten Oberflächenbereich der Trägerscheibe 16 bzw. 18.

Es sei hier darauf hingewiesen, dass die Führungskörper 36 sowie die Trägerscheiben 16, 18 zumindest in denjenigen Bereichen, in welchen sie die Führungsbahnen 36, 40 bereitstellen, gehärtet sein können, um über die Betriebslebensdauer der Schwingungsdämpfereinrichtung 12 hinweg das Auftreten von Verschleiß zu vermeiden.

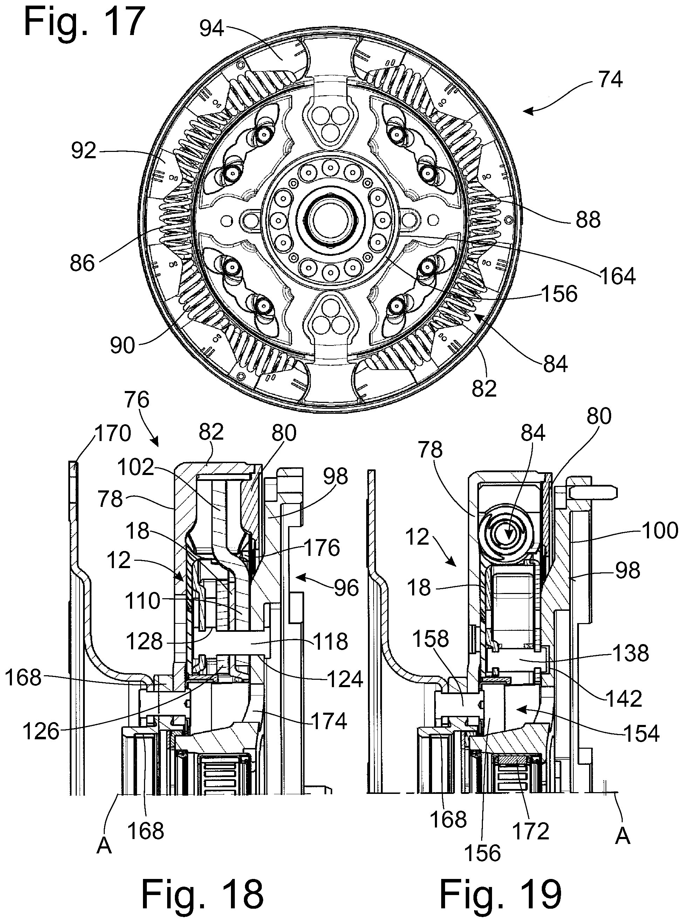

Die Fig. 17 bis 19 zeigen die vorangehend beschriebene Schwingungsdämpfereinrichtung 12 integriert in eine als Zweimassenschwungrad aufgebaute Torsionsschwingungsdämpfereinrichtung 74. Die Torsionsschwingungsdämpfereinrichtung 74 umfasst eine Primärseite 76, welche im Wesentlichen mit zwei Deckscheiben 78, 80 aufgebaut ist. Dabei weist die antriebsseitig zu positionierende Deckscheibe 78 in ihrem radial äußeren Bereich eine Außenumfangswandung 82 auf, an deren axiales Ende die andere Deckscheibe 80 beispielsweise durch Verschweißung angebunden ist. Durch die beiden Deckscheiben 78, 80 ist ein Volumenbereich insbesondere auch nach radial außen begrenzt, in welchem eine Dämpferelementenanordnung 84 der Torsionsschwingungsdämpferanordnung 74 angeordnet ist. Die Dämpferelementenanordnung 84 umfasst im dargestellten Beispiel zwei Dämpferelementeneinheiten 86, 88, welche sich jeweils annähernd über einen Winkelbereich von 180° erstrecken und eine Mehrzahl von in Umfangsrichtung aufeinander folgenden und auch radial ineinander geschachtelt angeordneten Dämpferfedern 90 umfassen können. Die in Umfangsrichtung aufeinander folgenden Dämpferfedern 90 einer jeweiligen Dämpferelementeneinheit 86 bzw. 88 sind aneinander durch so genannte Gleitschuhe 92 abgestützt, welche sich fliehkraftbedingt nach radial außen an der Außenumfangswandung 82 abstützen können. Die Endbereiche einer jeweiligen Dämpferelemeteneinheit 86 bzw. 88 sind über so genannte Federteller 94 an zugeordneten Umfangsabstützbereichen der Primärseite 76 bzw. einer Sekundärseite 96 der Torsionsschwingungsdämpferanordnung 74 abgestützt.

Die Sekundärseite 96 umfasst die Schwingungsdämpfereinrichtung 10 sowie damit fest verbunden ein sekundärseitiges Masseteil 98, welches beispielsweise eine Reibfläche 100 für eine Reibungskupplung bereitstellen kann. Mit dem sekundärseitigen Masseteil 98 und der Schwingungsdämpfereinrichtung 12 sind in der Fig. 1 auch erkennbare Umfangsabstützelemente 102, 104 fest verbunden. Jedes dieser Umfangsabstützelemente 102, 104, die zueinander entsprechend der Erstreckungslänge der Dämpferelementeneinheiten 86, 88 einen Winkelabstand von etwa 180° aufweisen, umfasst einen radial äußeren Umfangsabstützbereich 106 bzw. 108 zur Umfangsabstützung der Federteller 94 und somit der Dämpferelementeneinheiten 86, 88. In ihrem radial inneren Bereich weisen die Umfangsabstützelemente 102, 104 jeweils einen Verbindungsbereich 110 bzw. 112 auf. In diesem Verbindungsbereich sind die Umfangsabstützelemente 102, 104 in nachfolgend beschriebener Art und Weise mit dem Auslenkungsmassenträger 12 der Schwingungsdämpfereinrichtung 10 einerseits und dem sekundärseitigen Masseteil 98 andererseits fest verbunden.

In Fig. 6 sind an der dem sekundärseitigen Masseteil 98 benachbart positionierten Trägerscheibe 18 zwei in einem Umfangsabstand von 180° liegende und nach radial außen im Wesentlichen offene, also den Außenumfangswandungsbereich 26 auch unterbrechende Einsenkungen 114, 116 erkennbar. In ihrer Umfangskontur sind diese an die Umfangskontur des in Fig. 8 erkennbaren radial innen liegenden Verbindungsbereichs 110 bzw. auch 112 der Umfangsabstützelemente 102, 104 angepasst. Diese Verbindungsbereiche 110, 112 liegen somit jeweils an der Außenseite, also der von der Trägerscheibe 16 abgewandten Seite der Trägerscheibe 18 in einer jeweiligen Einsenkung 114, 116. Wie man beispielsweise in Fig. 1 erkennt, ist die Anordnung vorzugsweise derart, dass die Außenoberfläche der Verbindungsbereiche 110 bzw. 112 im Wesentlichen bündig liegt mit einer Außenoberfläche der Trägerscheibe 16. Da im Übergangsbereich zwischen einem jeweiligen Verbindungsbereich 110, 112 zum zugeordneten Umfangsabstützbereich 106, 108 die Umfangsabstützelemente 102, 104 axial abgekröpft sind, liegen trotz der Positionierung der Verbindungsbereiche 110, 112 an der Außenseite der Trägerscheibe 18 die jeweiligen Umfangsabstützbereiche 106, 108 näherungsweise axial, bezogen auf eine Drehachse A der Torsionsschwingungsdämpferanordnung 74, mittig bezüglich des Auslenkungsmassenträgers 14, was zu einer axial kompakten Bauweise beiträgt.

Die feste Verbindung der Umfangsabstützelemente 102, 104 mit dem sekundärseitigen Masseteil 98 einerseits und dem Auslenkungsmassenträger 14 andererseits erfolgt durch eine Mehrzahl erster Verbindungselemente 118. Man erkennt, dass jedem Umfangsabstützelement 102, 104 drei in Dreieckskonfiguration angeordnete und als Nietbolzen ausgebildete erste Verbindungselemente 118 zugeordnet sind. Diese durchgreifen jeweils eine Öffnung 120 in der Trägerscheibe 18, eine Öffnung 122 im Verbindungsbereich 110, 112 der Umfangsabstützelemente 102, 104 und eine Öffnung 124 im radial mittleren Bereich des sekundärseitigen Masseteils 98. Somit liegen, wie die Fig. 18 dies deutlich zeigt, in axialer Abfolge das sekundärseitige Masseteil 98, das Umfangsabstützelement 102 bzw. 104 mit seinem Verbindungsbereich 110 bzw. 112 die Trägerscheibe 18 und ein an der Innenseite der Trägerscheibe 18 angeordnetes, in seiner Umfangskontur näherungsweise der Umfangskontur des Verbindungsbereichs 110 bzw. 112 angepasstes Distanzelement 126 aneinander an. Dieses in Fig. 9 auch erkennbare Distanzelement 126 dient dazu, einen definierten Abstand der beiden Trägerscheiben 16, 18 zueinander sicherzustellen. Ferner kann es zur Bereitstellung einer hohen Zugfestigkeit wärmebehandelt sein, da sichergestellt werden muss, dass es beim Nietverbindungsvorgang nicht plastisch verformt wird. Ferner bewirkt das Distanzelement 126 eine Senkung der in der Trägerscheibe 18 auftretenden und durch die ersten Verbindungselemente 118 erzeugten Spannungen. Durch die Außenumfangskontur ist sichergestellt, dass ein gegenseitiges Stören der in Zuordnung zu jedem Umfangsabstützelement 102, 104 vorgesehenen Distanzelemente 126 mit den Auslenkungsmassen 14 nicht auftritt.

Man erkennt in Fig. 18, dass die ersten Verbindungselemente 118 einen bundartigen Erweiterungsbereich 128 aufweisen. Dieser hintergreift die Distanzelemente 126 jeweils in einem die darin gebildeten Öffnungen 130 umgebenden Bereich und stellt einen definierten Axialabstand zwischen den Distanzelementen 126 und der Trägerscheibe 16 sicher.

In Zuordnung zu den Einsenkungen 114, 116 der Trägerscheibe 18 weist die Trägerscheibe 16 auf die Trägerscheibe 18 zu gerichtete Einsenkungen 132, 134 auf. Diese weisen Öffnungen 136 für die ersten Verbindungselemente 118 auf. Durch das Bereitstellen der Einsenkungen 132, 134 ist sichergestellt, dass die an der Außenseite der Trägerscheibe 16 gebildeten Nietköpfe der ersten Verbindungselemente 118 im Wesentlichen nicht über die im radial sich erstreckenden Bereich 20 der Trägerscheibe 16 gebildete Oberfläche hervorstehen.

Durch die ersten Verbindungselemente 118 sind neben der vorangehend beschriebenen festen Anbindung der Umfangsabstützelemente 102 an das sekundärseitige Masseteil 98 auch die beiden Trägerscheiben 16, 18 fest miteinander verbunden. Um diesen Zusammenhalt noch weiter zu verbessern, sind an in einem Winkelabstand von 90° zu den Umfangsabstützelementen 102, 104 vorgesehenen Positionen zweite Verbindungselemente 138, vorzugsweise ebenfalls bereitgestellt durch Nietbolzen, vorgesehen. Somit ist dafür gesorgt, dass verteilt über vier Umfangspositionen mit einem jeweiligen Umfangsabstand von näherungsweise 90° eine feste Kopplung der beiden Trägerscheiben 16, 18 erzielt ist, was insbesondere dann von besonderem Vorteil ist, wenn diese im Bereich ihrer Außenumfangswandungsbereiche 22, 26 nicht durch Verschweißung miteinander verbunden sind. Die zweiten Verbindungselemente 138 sind dabei als Distanzelemente ausgebildet, um eine definierte Axialpositionierung der Trägerscheiben 16, 18 zu gewährleisten.

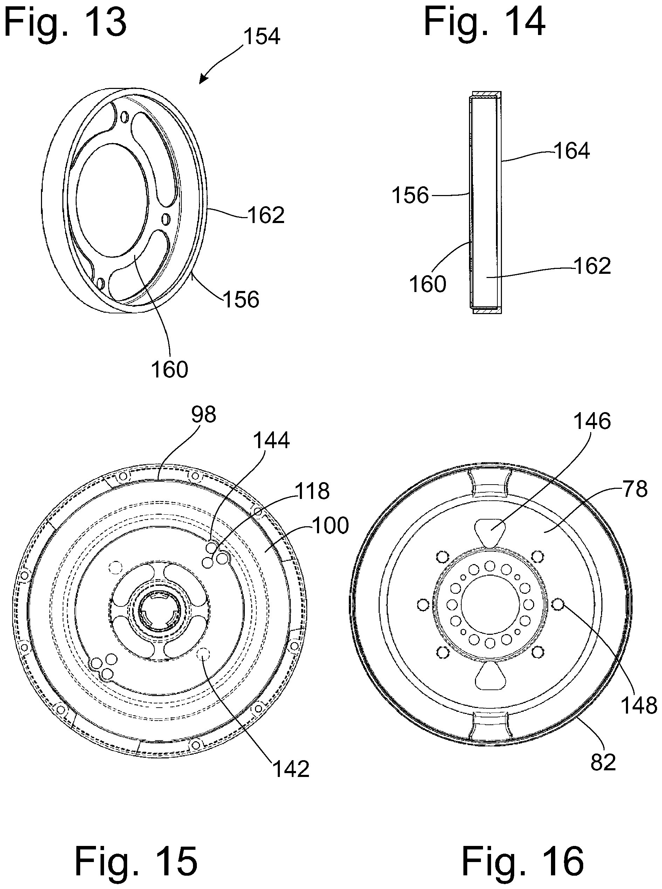

Während die Trägerscheibe 18 in Zuordnung zu den zweiten Verbindungselementen Einsenkungen 140 aufweist, so dass deren Nietköpfe in diese Einsenkungen 140 zu liegen kommen, stehen die Nietköpfe im Bereich der Trägerscheibe 18 axial hervor. Um ein gegenseitiges Stören mit dem sekundärseitigen Masseteil 98 zu vermeiden, weist dieses in der Fig. 15 angedeutete und in Fig. 19 auch erkennbare Einsenkungen 142 zur Aufnahme der Nietköpfe der zweiten Verbindungselemente 138 auf.

Wie man in Fig. 15 weiter erkennt, sind die Nietköpfe der ersten Verbindungselemente 118, welche jeweils in Dreiergruppen angeordnet sind, bezüglich der Reibfläche 100 des sekundärseitigen Masseteils 98 so angeordnet, dass sie radial geringfügig in diese eintauchen. In diesem Bereich weist das sekundärseitige Masseteil 98 Ausformungen 144 auf, welche sich in die Reibfläche 100 hinein erstrecken, um Aufnahmeraum für die Nietköpfe der ersten Verbindungselemente 118 zu schaffen.

In Zuordnung zu den ersten Verbindungselementen 118 sind in der Deckscheibe 78 der Primärseite 76 der Torsionsschwingungsdämpferanordnung 74 Aussparungen 146 gebildet. Diese ermöglichen einen Zugriff auf die axialen Endbereiche der ersten Verbindungselemente 118 beim Durchführen des Nietverbindungsvorgangs. An mehreren Umfangspositionen weist die Deckscheibe 78 weitere Aussparungen bzw. Öffnungen 148 auf. Auch die der Deckscheibe 78 benachbart positionierte Trägerscheibe 16 weist an zwei Umfangspositionen, nämlich dort, wo auch die Einsenkungen 140 für die zweiten Verbindungselemente 138 gebildet sind, Öffnungen 150 auf. Diese Öffnungen sind zur Montagehilfe bzw. als Messöffnungen bereitgestellt.

Um ein gegenseitiges Stören der Auslenkungsmassen 14 mit den Einsenkungen 140 zu vermeiden, weisen die Auslenkungsmassen 14 an ihrem radialen inneren Bereich Einsenkungen bzw. Aussparungen 152 auf, in welche bei Umfangsauslenkung der Auslenkungsmassen 14 die Einsenkungen 140 eintauchen können.

In Zuordnung zu den Auslenkungsmassen 14 ist an der Primärseite 76 der Torsionsschwingungsdämpferanordnung 74 eine in den Fig. 13 und 14 in Einzelansicht dargestellte Bewegungsbegrenzungsanordnung 154 vorgesehen. Diese umfasst einen ringartig ausgebildeten Bewegungsanschlag bzw. ein Anschlagelement 156 mit einem im Wesentlichen radial sich erstreckenden und durch Nietbolzen mit der Deckscheibe 78 fest verbundenen Bereich 160. Radial außen daran anschließend weist der Bewegunsganschlag 156 einen im Wesentlichen zylindrischen, ringartigen Bereich 162 auf, auf welchen ein entsprechend ringartig geformtes, elastisches Element 164, beispielsweise aus Gummi oder gummiartigem Material, aufgeschoben ist. Dieses am Bewegungsanschlag 156 getragene elastische Element 164 liegt, wie dies in der Fig. 17 deutlich zu erkennen ist, radial innerhalb der Auslenkungsmassen 14.

In Zuordnung zu diesem Bewegungsanschlag 156 weisen die Auslenkungsmassen 14 in ihrem radial inneren Bereich Anschlagflächen 166 auf, welche entsprechend der Krümmung der Außenumfangsfläche des elastischen Elements 164 gekrümmt sind. Bei übermäßiger Bewegung der Auslenkungsmassen 14 nach radial innen kommen diese mit ihren Anschlagflächen 166 in Anlage an der Außenumfangsfläche des Bewegungsanschlags 156, wobei aufgrund der Zwischenlagerung des elastischen Elements 164 eine Anschlagdämpfung bereitgestellt ist. Neben dieser Dämpfungswirkung hat das elastische Element 164 die Funktion, dass sie nach dem Anschlagen der Auslenkungsmassen 14 diese federartig zurückbeschleunigen, so dass das Anschlagen der Auslenkungsmassen 14 an der Bewegungsbegrenzungsanordnung 154 die Oszillationsbewegung der Auslenkungsmassen 14 weniger stark beeinträchtigt. Ferner schützt das elastische Element 164 den Bewegungsanschlag 156, welcher im Allgemeinen als Blechformteil ausgebildet ist, vor wiederholtem übermäßig starkem Aufschlag der Auslenkungsmassen 14. Es ist selbstverständlich, dass bei entsprechend harter Ausgestaltung des Bewegungsanschlags 156 insbesondere in seinem zylindrischen Bereich 162 auch auf das elastische Element 164 verzichtet werden kann.

Durch Nietbolzen 158 ist mit der Primärseite 76 der Torsionsschwingungsdämpferanordnung 74, insbesondere der Deckscheibe 78, weiterhin ein Lagerring 168 sowie ein zur Anbindung an eine Antriebswelle bzw. eine Flexplatte oder dergleichen vorgesehenes Kopplungselement 170 fest verbunden. Weiter zeigen die Fig. 18 und 19 zwei verschiedene Ausgestaltungsvarianten des Lagerrings 168, nämlich einmal zweigeteilt und einmal einteilig. An dem Lagerring 168 ist über ein Gleitlager der radial innere Bereich des sekundärseitigen Masseteils 98 zumindest in radialer Richtung gelagert, wodurch auch die Primärseite 76 und die Sekundärseite 96 der Torsionsschwingungsdämpferanordnung 74 radial bezüglich einander gelagert sind. In diesem radial inneren Bereich des sekundärseitigen Masseteils 98 kann weiterhin ein Lager 172, beispielsweise ausgebildet als Wälzkörperlager, aufgenommen sein, um eine Lagerung bezüglich des axialen Endes einer Abtriebswelle, also beispielsweise einer Getriebeeingangswelle, vorzusehen. Radial außerhalb dieses das Lager 172 aufnehmenden Bereichs weist das sekundärseitige Masseteil Öffnungen 174 auf, durch welche hindurch Zugriff auf die Nietbolzen 158 zur Herstellung der Nietverbindung besteht. Vermittels des Lagerrings 168 ist es weiterhin möglich, die Primärseite 76 auf einen an einer Kurbelwelle oder Antriebswelle ausgebildeten oder damit verbundenen Flansch zu lagern.

Die vorangehend angesprochene Öffnung 148 im Deckscheibenelement 78 können ferner als Füllöffnungen zum Einbringen von viskosem Medium in demjenigen Volumenbereich, in welchem die Dämpferlementenanordnung 84 vorgesehen ist, genutzt werden. Nach dem Einbringen können die Öffnungen 148 verschlossen werden, um das Eindringen von Verunreinigungen zu vermeiden. Entsprechend können auch die Aussparungen 146 nach dem Herstellen der Nietverbindung vermittels der ersten Verbindungselemente 118 geschlossen werden. Um auch an der anderen axialen Seite einen dichten Abschluss zu erreichen, kann ein beispielsweise aus Blechmaterial geformtes Dichtelement 176 (Fig. 18) vorgesehen sein. Dieses stützt sich in seinem radial äußeren Bereich am Deckscheibenelement 80 ab und erzeugt damit dort einen dichten Anlageabschluss. Radial innen liegt es am sekundärseitigen Masseteil 98 an und liegt somit zwischen diesem und den Umfangsabstützelementen 102, 104. Das Abschlusselement 176 ist somit durch die ersten Verbindungselemente 118 fest an die Sekundärseite 96 angebunden.

Im Drehbetrieb können bei Auftreten von Drehungleichförmigkeiten, wie z. B. starke Drehmomentschwankungen, Lastwechselschwingungen oder auch durch die periodischen Zündungen in einer Brennkraftmaschine erzeugte Anregungen, durch Relativdrehung der Primärseite 76 bezüglich der Sekundärseite 96 der Torsionsschwingungsdämpferanordnung 74 gedämpft werden. Verbleibende Drehungleichförmigkeiten werden durch die Schwingungsdämpfereinrichtung 10, welche sekundärseitig an der Torsionsschwingungsdämpferanordnung 74 vorgesehen ist, weiter gemindert. Die Schwingungsdämpfereinrichtung 10 ist dabei drehzahladaptiv, was bedeutet, dass deren Eigenfrequenz sich bei steigender bzw. auch fallender Drehzahl entsprechend mit verschiebt. Dies ermöglicht es, die Schwingungsdämpfereinrichtung 10 auf eine Anregungsordnung, beispielsweise die Zündfrequenz einer Brennkraftmaschine, abzustimmen und diese über den gesamten Drehzahlbereich hin zu entkoppeln. Dabei sollte vorzugsweise eine Abstimmung auf eine Hauptschwingungsordnung vorgenommen werden, was im Falle einer Vierzylinder-Viertakt-Brennkraftmaschine der zweiten Ordnung der Zündfrequenz entsprechen kann. Eine Abstimmung auf die erste Ordnung einer derartigen Anregungsfrequenz würde zwar zu einer sehr guten Minderung der auftretenden Drehungleichförmigkeiten führen. Diese hätten jedoch eine vergleichsweise große Auslenkung der Auslenkungsmassen 14 zur Folge, was aufgrund des begrenzten Bauraums oftmals nicht möglich ist. Aus diesem Grunde kann beispielsweise die Abstimmung derart erfolgen, dass die Eigenfrequenz der Auslenkungsmassen bzw. der Schwingungsdämpfereinrichtung 10 kurz oberhalb der zweiten Anregungsordnung der Brennkraftmaschine liegt, so dass einerseits zwar ein ausreichendes Tilgungspotential für die auftretenden Schwingungen erreicht wird, eine übermäßige Auslenkung der Auslenkungsmassen 14 jedoch vermieden wird.

Die zweiten und ersten Führungsbahnen 40, 34 am Auslenkungsmassenträger 12 einerseits und an den Auslenkungsmassen 14 andererseits können beispielsweise kreisförmig gekrümmt sein. Alternativ ist es auch möglich, hier eine epizykloidenförmige Geometrie für die Führungsbahnen bereitzustellen, was insbesondere bei niedrigeren Drehzahlen zu einem verbesserten Schutz der Auslenkungsmassen gegen übermäßige Auslenkung beitragen kann.

Durch das Bereitstellen jeweils zweier Führungskörper 36 bei jeder Auslenkungsmasse 14 ist dafür gesorgt, dass diese eine Pendelbewegung ausführenden Auslenkungsmassen 14 eine nahezu parallelogrammartige Verschiebung erfahren, was den zur Verfügung stehenden Bauraum sehr effizient nutzt. Auch stärkere Schwingungsanregungen, wie sie beispielsweise beim Motorstart erfolgen, führen trotz des beengten Bauraums nicht zu einem übermäßigen Anschlagen der Auslenkungsmassen 14, insbesondere deshalb, da für diese die Bewegungsbegrenzungsanordnung 154 mit dem elastischen Element 164 vorgesehen ist.

Nachfolgend werden verschiedene Variationen beschrieben, welche einzeln oder in Kombination bei der vorangehend erläuterten Schwingungsdämpfereinrichtung bzw. Torsionsschwingungsdämpferanordnung bzw. auch miteinander vorgesehen sein können. Es wird mit Bezug auf diese Variationen im Wesentlichen nur die für diese spezifischen Aspekte erläutert.

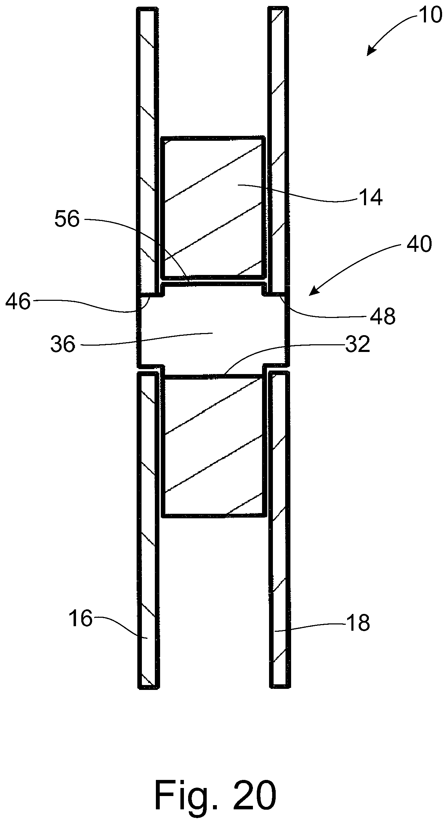

Die Fig. 20 zeigt eine konstruktiv sehr einfach ausführbare Variante einer Schwingungsdämpfereinrichtung 10. Man erkennt, dass die beiden Trägerscheiben 16, 18 insbesondere in ihrem radial äußeren Bereich planar, also ohne axiale Ausformung, ausgebildet sind und somit den zwischen diesen begrenzten Volumenbereich nach radial außen im Wesentlichen offen lassen. Die Auslenkungsmassen 14 und die diesen zugeordneten Führungskörper 36 sind im Bereich ihrer miteinander in Wechselwirkung tretenden Oberflächenkolben, also den Führungsflächen 32 einerseits und den Oberflächenbereichen 56 andererseits ohne ballige Kontur, also im Wesentlichen zylindrisch ausgebildet. Es sind keine Führungsbahnelemente vorgesehen, sondern die Abschnitte 46, 48 der jeweiligen zweiten Führungsbahnen 40 sind durch beispielsweise bei einem Stanzvorgang sich ergebende Stirnfläche gebildet.

Es ist vorteilhaft, die Führungskörper 36 in ihren mit der jeweiligen zweiten Führungsbahn 40 bzw. in Führungsbahnabschnitten derselben zusammenwirkenden Endbereichen mit zylindrischer Kontur auszugestalten.

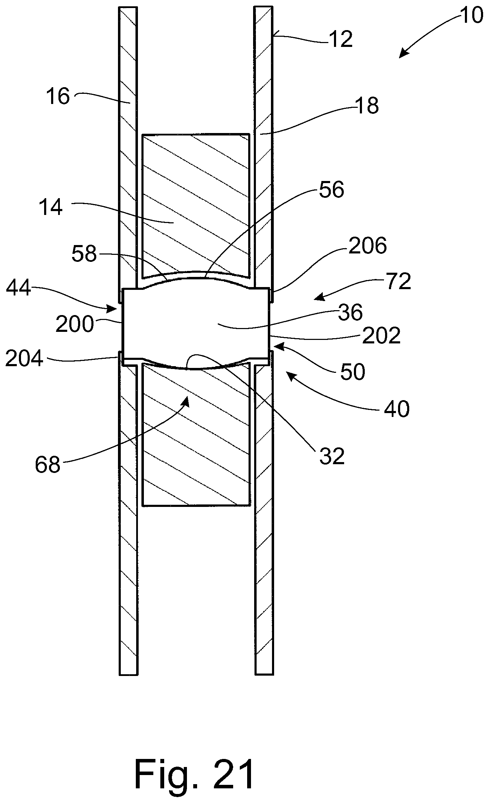

Die Fig. 21 zeigt eine Ausgestaltungsvariante einer zweiten Axialzentrieranordnung 72, durch welche die oder zumindest einzelne der Führungskörper 36 axial bezüglich des Auslenkungsmassenträgers 12, also hier der Trägerscheiben 16, 18, zentriert werden können. Man erkennt, dass die axialen Stirnflächen 200, 202 an den axialen Enden des Führungskörpers 36 durch im Bereich der Öffnungen 44, 50 in den Trägerscheiben 16, 18 gebildete Axialabstützabschnitte 204 bzw. 206 radial übergriffen sind. An diesen Axialabstützabschnitten kommen die Stirnflächen 200, 202 axial zur Anlage, wodurch der Führungskörper 36 in definierter axialer Positionierung gehalten ist.

Die axiale Zentrierung der bzw. jeder Auslenkungsmasse 14 erfolgt wieder über die erste Axialzentrieranordnung 68, hier bereitgestellt durch die zwischen ihren axialen Enden konkav geformte Führungsfläche 32, welche im Wesentlichen die erste Führungsbahn bereitstellen, bzw. die entsprechend konvex geformte Außenumfangsfläche 58 im Außenumfangsflächenbereich 56 des Führungskörpers 36.

Da bei dieser Ausgestaltungsvariante aufgrund des radialen Übergreifens der Stirnflächen 200, 202 durch Abschnitte der Trägerscheiben 16, 18 die zur radialen Stützung der Führungskörper 36 zur Verfügung stehende Gesamtoberfläche im Bereich einer jeweiligen zweiten Führungsbahn 40 vergleichsweise gering ist, sollten die Führungskörper 36 in ihrem mit der zweiten Führungsbahn 40 zusammenwirkenden Bereich einen Mindestdurchmesser nicht unterschreiten. Hierzu ist es weiter vorteilhaft, auf den stufenartige Übergang zum Außenumfangsflächenbereich 56 zu verzichten.

Um bei dieser Ausgestaltungsvariante die im Bereich der Trägerscheiben 16, 18 bzw. der daran gebildeten Abschnitte der zweiten Führungsbahnen 40 auftretende Flächenbelastung zu verringern, können die die Stirnflächen 200, 202 übergreifenden Axialzentrierabschnitte 204, 206 durch an den Außenseiten der Trägerscheiben 116, 118 vorgesehene separate Bauteile bereitgestellt sein. Auch können die vorangehend bereits erläuterten zweiten Führungsbahnelemente zum Einsatz gelagen, welche dann durch Materialauswahl einerseits und Formgebung andererseits an die auftretenden Belastungen optimal angepasst werden können.

Es sei auch hier darauf hingewiesen, dass selbstverständlich alle vorangehend beschriebenen Aspekte bei der Ausgestaltung der verschiedenen dargestellten Bauteile auch hier einzeln oder in Kombination realisiert sein können. Dies trifft auch für die folgenden Ausführungen zu verschiedenen Varianten der Schwingungsdämpfereinrichtung zu.

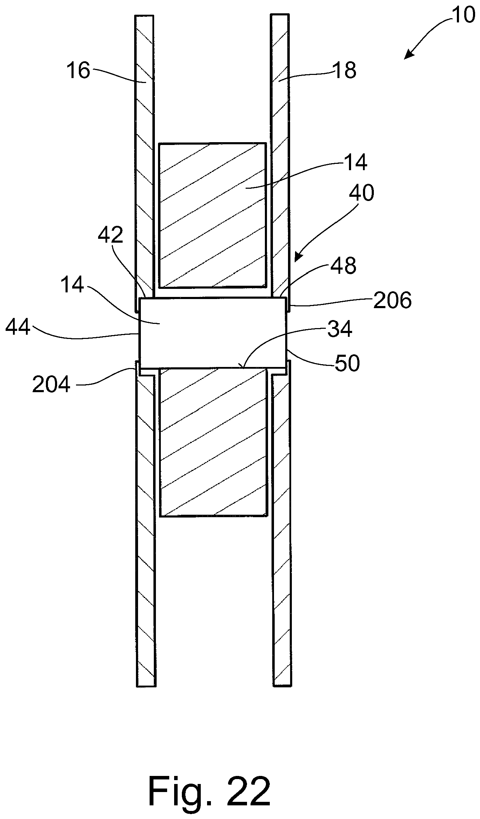

Die Fig. 22 zeigt eine Ausgestaltungsvariante, welche die vorangehenden mit Bezug auf die Fig. 20 und 21 thematisierten Aspekte kombiniert. Hier ist beispielsweise in einem Fall, in welchem für eine axiale Zentrierung der Auslenkungsmassen 14 der Schwingungsdämpfereinrichtung 10 nicht gesorgt werden muss, auf die ballige Gestaltung der Führungskörper 14 bzw. des jeweils zugeordneten ersten Führungsbahn 34 verzichtet, so dass hier jeweils im Wesentlichen zylindrische Konturen vorgesehen sind. Für eine axiale Zentrierung bzw. Halterung der Führungskörper 14 zwischen den beiden Trägerscheiben 16, 18 ist durch die an diesen im Bereich der Öffnungen 44, 50 vorgesehenen Axialzentrierabschnitte 204, 206 gesorgt. Auch hier können selbstverständlich die Abschnitte 42, 48 der zweiten Führungsbahnen 40 sowie die Axialzentrierabschnitte 204, 206 an in den Öffnungen 44, 50 vorgesehenen zweiten Führungsbahnelementen ausgebildet sein.

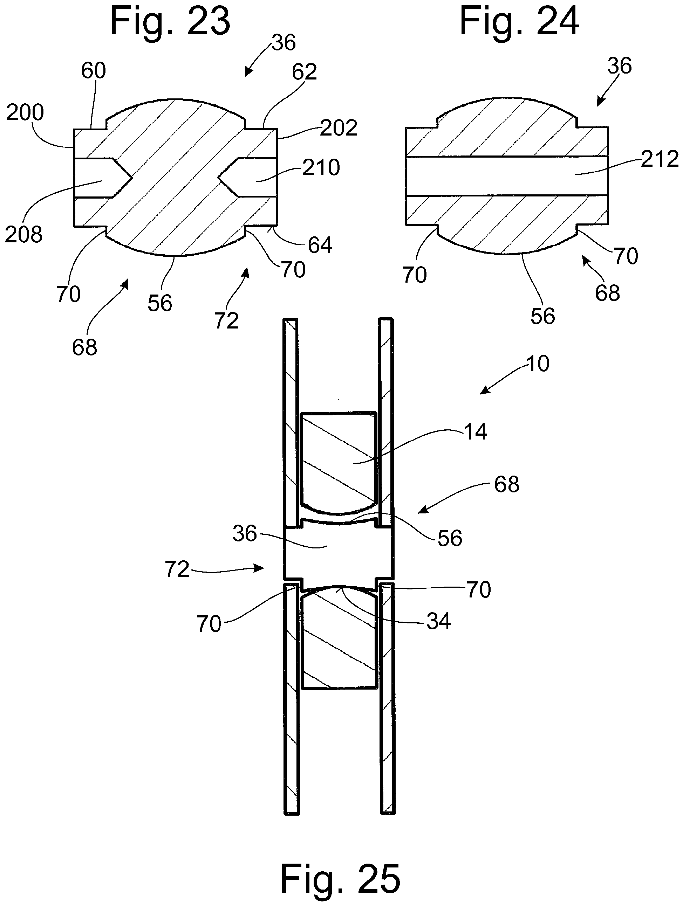

Die Fig. 23 und 24 zeigen jeweils einen Führungskörper 36, bei welchem durch die konvexe Ausgestaltung des Außenumfangsflächenbereichs 56 jeweils ein Bereich einer ersten Axialzentrieranordnung 68 bereitgestellt ist, während durch eine jeweilige Radialschulter am Übergang zwischen dem mit einer ersten Führungsbahn zusammenwirkenden Außenumfangsflächenbereich 56 und den jeweils mit einem Abschnitt einer zweiten Führungsbahn zusammenwirkenden Abschnitten 60, 62 des Außenumfangsflächenbereichs 64 ein Teilbereich einer zweiten Axialzentrieranordnung 72 bereitgestellt ist.

Man erkennt, dass bei dem in Fig. 23 dargestellten Führungskörper 36 an seinen beiden axialen Endbereichen jeweils zu dessen Rotations- bzw. Längsmittenachse zentrische und an den axialen Endbereichen bzw. Stirnseiten 200, 202 offene Ausnehmungen 208, 210 gebildet sind. In dem in Fig. 24 gezeigten Führungskörper 36 ist eine diesen Axialformschräge durchsetzende Ausnehmung 212 erkennbar. Auf diese Art und Weise können die Führungskörper 36 auch dann, wenn sie beispielsweise aus Metallmaterial aufgebaut sind, mit geringerem Gewicht bereitgestellt werden, was das Schwingungsverhalten der Auslenkungsmassen 14 vorteilhaft beeinflussen kann.

Die Fig. 25 zeigt eine Variante einer Schwingungsdämpfereinrichtung 10, bei welcher die erste Axialzentrieranordnung 68 wieder unter Zusammenwirkung der Auslenkungsmasse 14 im Bereich ihrer bzw. des Außenumfangsflächenbereichs 56 des Führungskörpers 36 gebildet ist. Bei dieser Gestaltung ist der Außenumfangsflächenbereich 56, also im Wesentlichen der zwischen zwei Radialschultern 70 der zweiten Axialzentrieranordnung 72 liegende Außenumfangsflächenbereich, mit konkaver Gestalt ausgebildet, während die Auslenkungsmasse 14 insbesondere im Bereich ihrer ersten Führungsbahn 34 mit in axialer Richtung konvexer Gestalt gebildet ist.

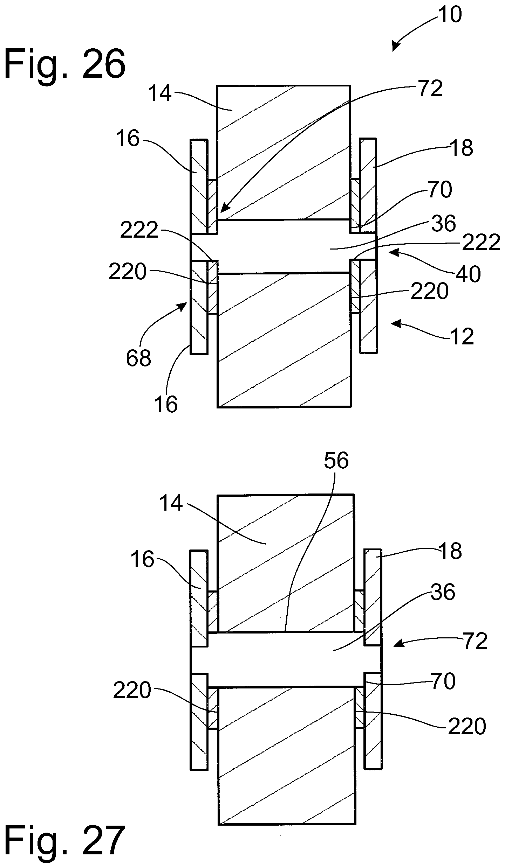

Die Fig. 26 zeigt eine Ausgestaltungsvariante, bei welcher an beiden axialen Seiten einer Auslenkungsmasse 14 zur axialen Abstützung an den Trägerscheiben 16 bzw. 18 wenigstens ein scheibenartig ausgebildetes Abstützelement 220 angeordnet ist. Diese weisen in Zuordnung zu den Abschnitten der zweiten Führungsbahn 40 Durchgriffsöffnungen 222 auf. Diese Durchgriffsöffnungen können, insbesondere dann, wenn die scheibenartigen Abstützelemente 220 an den Trägerscheiben 16, 18 festgelegt sind, einen Oberflächenbereich der Abschnitte der zweiten Führungsbahn 40 bereitstellen.

An den Abstützelementen 220 stützt sich die Auslenkungsmasse 14 in axialer Richtung bezüglich der Trägerscheiben 16, 18 und somit des Auslenkungsmassenträgers 12 ab. Auch stützt sich der Führungskörper 36 mit seinen Radialschultern 70 in axialer Richtung an diesen Abstützelementen 220 ab, so dass diese sowohl der ersten Axialzentrieranordnung 68, als auch der zweiten Axialzentrieranordnung 72 zugeordnet werden können.

Es sei auch hier darauf hingewiesen, dass derartige Abstützelemente ringartig um die Drehachse der Schwingungsdämpfereinrichtung 10 sich herum erstreckend ausgebildet sein können. Auch können einzelne durch Zuordnung zu einer oder mehreren zweiten Führungsbahnen 40 oder einer oder mehreren Auslenkungsmassen 14 diskret verteilt liegende Abstützelemente 220 vorgesehen sein. Die Abstützelemente 220 sind vorzugsweise aus einen Reibeffekt so weit als möglich reduzierendem Material, beispielsweise einem Kunststoffmaterial wie Teflon oder dergleichen, ausgebildet.

Bei der in Fig. 27 gezeigten Variante bilden die Abstützelemente 220 keinen Aspekt der zweiten Axialzentrieranordnung 72. Sie umgeben den dargestellten Führungskörper 36 in seinem Bereich größeren Durchmessers, also am Außenumfangsflächenbereich 56 und sorgen somit nur für eine Axialbstützung der Auslenkungsmasse 14 bezüglich der Trägerscheiben 16, 18. Die zweite Axialzentrieranordnung 72 umfasst im Wesentlichen wieder die direkt an den Trägerscheiben 16, 18 sich abstützenden Radialschultern 70 der Führungskörper 36. Ebenso wie bei der in Fig. 26 gezeigten Variante kann auch hier auf eine ballige Ausgestaltung der Führungskörper 36 in ihrem Außenumfangsflächenbereich 56 bzw. der ersten Führungsbahnen in den Auslenkungsmassen 14 verzichtet werden.

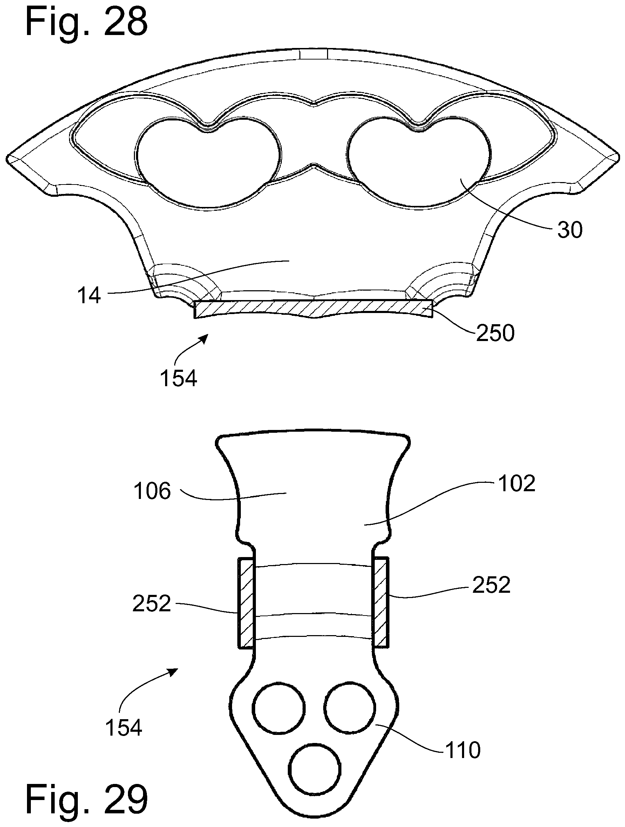

In Fig. 28 ist die Bewegungsbegrenzungsanordnung 154 beispielsweise mit dem in Fig. 13 erkennbaren Bewegungsanschlag 156 radial innerhalb der Auslenkungsmassen 14 ausgebildet. An der nach innen weisenden Seite der Auslenkungsmassen 14 ist jeweils ein elastisches Anschlagselement 250 vorgesehen, welches bei übermäßiger Auslenkung der Auslenkungsmassen 14 in Anlage am Bewegungsanschlag 156 kommt. Dadurch kann einerseits die Masse der Auslenkungsmassen 14 erhöht werden, andererseits der Aufbau insbesondere im Bereich des Bewegungsanschlags 156 selbst vereinfacht werden.

In Fig. 29 ist eine Variante gezeigt, bei welcher die Bewegungsbegrenzungsanordnung 154 zumindest ein Umfangsabstützelement 102 umfasst. An dessen beiden axialen Seiten sind beispielsweise im Übergangsbereich zwischen einem Umfangsabstützbereich 106 und einem Verbindungsbereich 110 elastische Elemente 252 vorgesehen, an welchen die in Umfangsrichtung ausgelenkten Auslenkungsmassen, die beidseits dieses Umfangsabstützelements 102 angeordnet sind, anschlagen können.

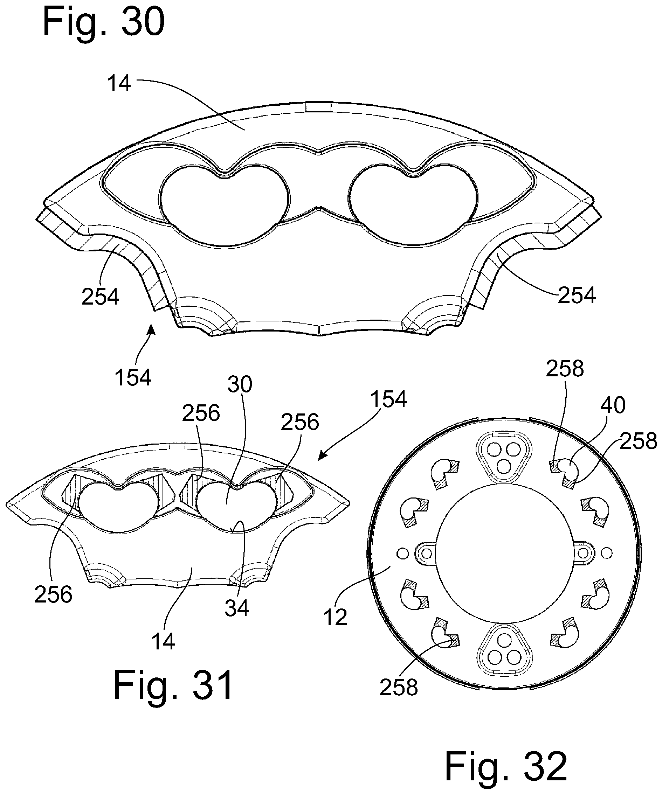

Bei der in Fig. 30 gezeigten Variante umfasst die Bewegungsbegrenzungsanordnung 154 an den beiden Umfangsendbereichen einer Auslenkungsmasse elastische Anschlagselemente 254. Auch hier kann als Bewegungsanschlag dann jeweils ein Umfangsabstützelement oder eine diese aufnehmenden Bereich einer Trägerscheibe genutzt werden, das in Umfangsrichtung benachbart einer derartigen Auslenkungsmasse 14 angeordnet ist.

Die Fig. 31 zeigt eine Auslenkungsmasse 14, bei welcher jeweils am Umfangsende einer Öffnung 30 und mithin auch im Endbereich einer jeweiligen ersten Führungsbahn 34 ein elastisches Anschlagselement 256 vorgesehen bzw. in die Öffnung 30 eingesetzt ist. Hier wird eine Bewegungsbegrenzung vermittels der Bewegungsbegrenzungsanordnung 154 dadurch erreicht, dass ein entlang einer ersten Führungsbahn 34 sich bewegender Führungskörper bei Erreichen des Endbereichs der Führungsbahn 34 durch die elastischen Anschlagselemente 56 an einer weiteren Bewegung gehindert wird, somit einen gedämpften Anschlag erfährt.

Alternativ oder zusätzlich können entsprechende elastische Anschlagselemente 258 auch in Zuordnung zu den zweiten Führungsbahnen bzw. den diese bereitstellenden Abschnitten in den Trägerscheiben des Auslenkungsmassenträgers 12 vorgesehen sein. Auch dort erfahren die Führungskörper dann bei Erreichen eines Endbereichs der jeweiligen zweiten Führungsbahn 40 einen elastischen Anschlag, so dass die Bewegung der Auslenkungsmassen 14 ohne einen gegenseitigen Anschlag von Metall auf Metall gebremst bzw. beendet wird. Da hier weder an den Auslenkungsmassen selbst, noch radial innerhalb davon Maßnahmen zur Bewegungsbegrenzung bereitgestellt werden müssen, steht mehr Bauraum für die Auslenkungsmassen zur Verfügung.

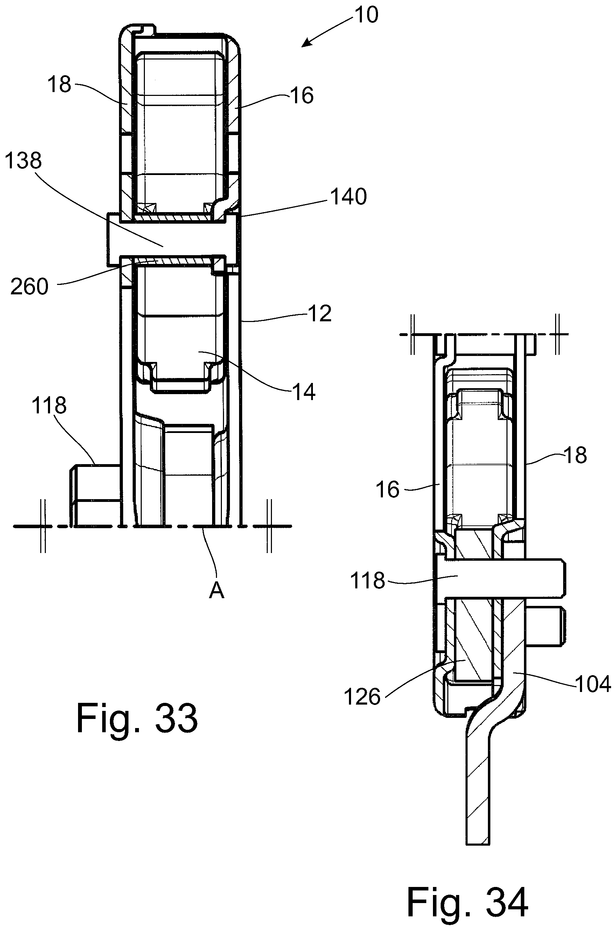

Die Fig. 33 zeigt einen Auslenkungsmassenträger 12, bei welchem die beiden Trägerscheiben 16, 18 unter anderem vermittels der diese axial durchsetzenden zweiten Verbindungselemente 138, auch hier als Nietbolzen ausgebildet, axial miteinander verbunden sind. Hier sind die Nietbolzen selbst nicht als Distanzelemente ausgebildet, sondern von einem hülsenartigen Distanzelement 260 umgeben, gegen welches sich die beiden Trägerscheiben 16, 18 beim Vernieten anlegen können.

Die Fig. 34 zeigt eine Variante, bei welcher das im Bereich der ersten Verbindungselemente 118, durch welche auch die Anbindung der Umfangsabstützelemente (hier 104) bzw. des sekundärseitigen Masseteils 98 erfolgt, die axiale Distanzierung der beiden Trägerscheiben 16, 18 realisiert. Hierzu ist das in der Fig. 34 erkennbare Distanzelement 126 dicker ausgeführt, als vorangehend dargestellt, so dass es den axialen Zwischenraum zwischen den beiden Trägerscheiben 16, 18 hier im Wesentlichen vollständig ausfüllt. Dies führt zu einer besseren Steifigkeit und mithin erhöhten Stabilität in demjenigen Bereich, in welchem durch die vermittels der ersten Verbindungselemente 118 realisierte Anbindung der Umfangsabstützelemente 104 an das sekundärseitige Masseteil auch das in einem Antriebsstrang zu übertragende Drehmoment weitergeleitet wird.

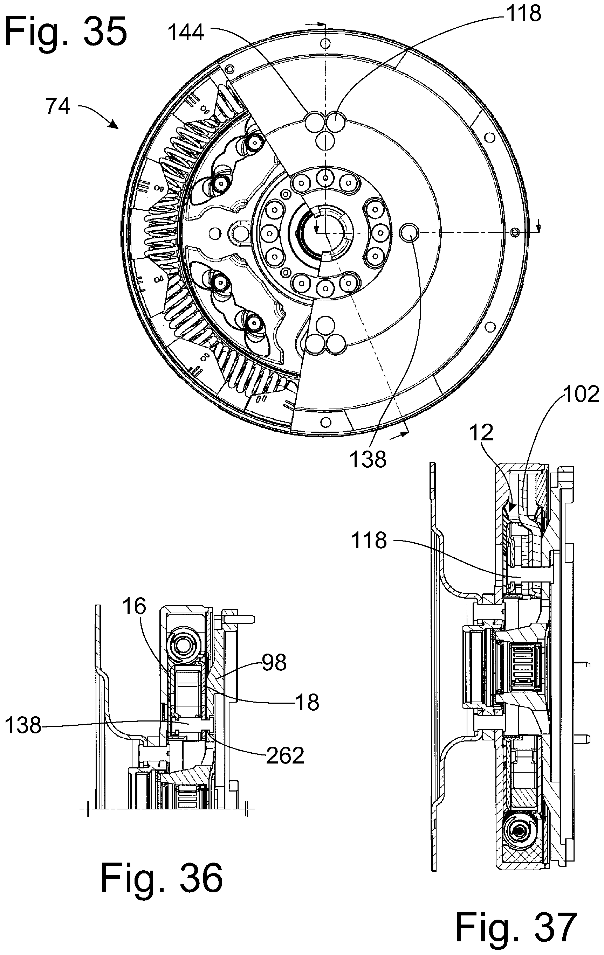

Die Fig. 35 bis 37 zeigen eine Ausgestaltungsvariante einer Torsionsschwingungsdämpferanordnung 74, bei welcher das sekundärseitige Masseteil 98 sowohl durch die vorzugsweise in Dreiergruppen angeordneten ersten Verbindungselemente 118 an die Umfangsabstützelemente 102, 104 angebunden ist, als auch durch die in einem Winkelabstand von 90° dazu angeordneten zweiten Verbindungselemente 138. Hierzu weist in Zuordnung zu diesen zweiten Verbindungselementen 138 das sekundärseitige Masseteil 98 jeweils eine gestufte Öffnung 262 auf, so dass auch der nach dem Vernieten gebildete Nietkopf sich in dieser Öffnung 262, nämlich dem Bereich mit größerem Durchmesser derselben, befindet. Während die zweiten Verbindungselemente 138 hier nicht der Drehmomentübertragung bzw. Einleitung in das sekundärseitige Masseteil 98 dienen, führen sie zu einer erhöhten Steifigkeit des im Wesentlichen mit den beiden Trägerscheiben 16, 18 aufgebauten Auslenkungsmassenträgers 12.

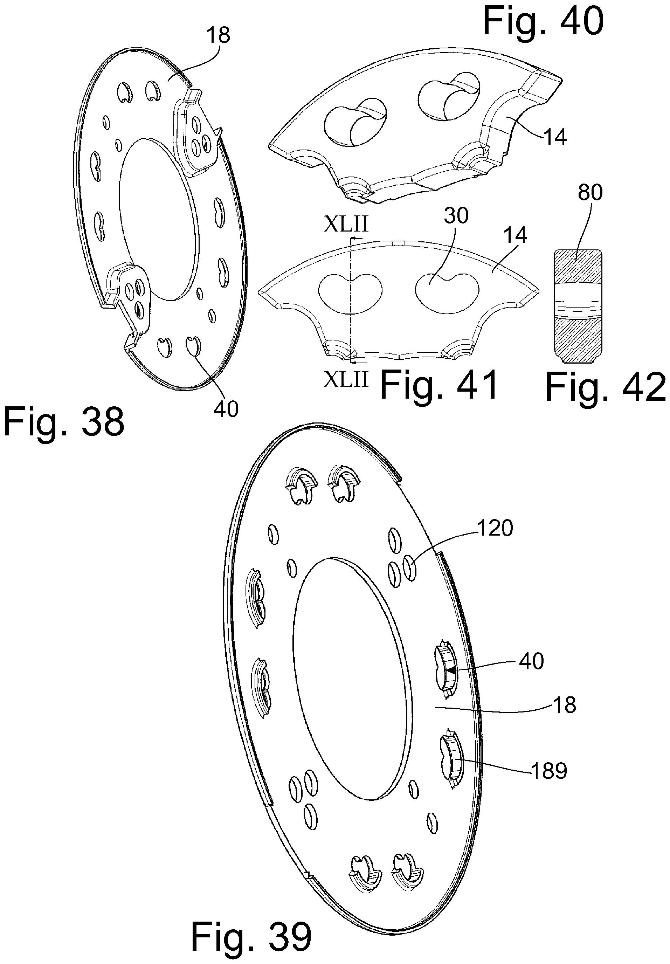

Die Fig. 38 und 39 zeigen Beispiele jeweils einer Trägerscheiben 18, die im Vergleich zu der vorangehend beschriebenen Variante mit einer Struktur mit weniger axialen Ausformungen versehen ist. So weist beispielsweise die in Fig. 38 gezeigte Trägerscheibe 18 im Bereich der jeweiligen ersten Führungsbahnen 40 keine axialen Ausformungen auf. Dies macht bei den damit zusammenwirkenden Auslenkungsmassen 14, wie sie in den Fig. 40, 41 und 42 gezeigt ist, das Vorsehen von zugeordneten Einsenkungen in der Umgebung der Öffnungen 30 nicht mehr erforderlich.

Die in Fig. 39 gezeigte Trägerscheibe 16 weist zwar in Zuordnung zu den jeweiligen ersten Führungsbahnen 40 eine axiale Ausformung auf, um die Führungsfläche zu vergrößern, weist jedoch dort, wo eine Anbindung eines jeweiligen Umfangsabstützelements erfolgen soll, wo also die Dreiergruppen von Öffnungen 120 zur Aufnahme der ersten Verbindungselemente 118 gebildet sind, keine Einsenkungen auf. Es ist selbstverständlich, dass auch bei diesem in Fig. 39 gezeigten Beispiel einer Trägerscheibe 18 die axialen Ausformungen im Bereich der ersten Führungsbahnen 40 weggelassen sein können, so wie in Fig. 38 gezeigt. Auch im Bereich derjenigen Öffnungen, in welchen eine Anbindung der zweiten Verbindungselemente erfolgen soll, ist eine im Wesentlichen plane Struktur vorgesehen. Es ist selbstverständlich, dass auch die jeweils andere Trägerscheiben entsprechend geformt sein kann.

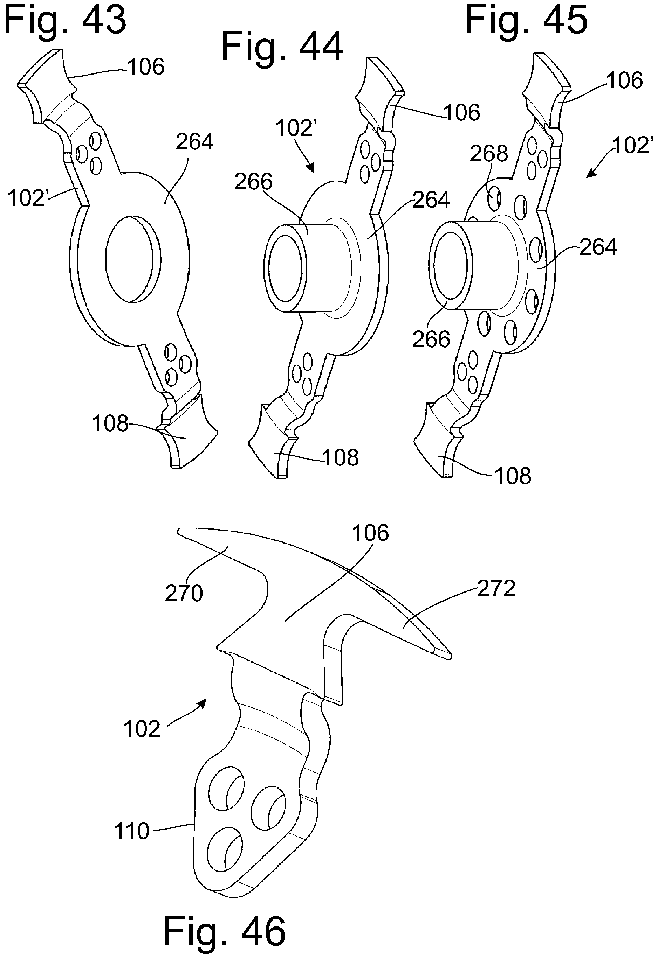

Die Fig. 43 bis 45 zeigen jeweils balkenartig ausgestaltete Umfangsabstützelemente 102' mit zwei in einem Winkelabstand von näherungsweise 180° zueinander angeordneten Umfangsabstützbereichen 106, 108. In einem zentralen Bereich weisen diese Umfangsabstützelemente 102' jeweils einen ringartigen Abschnitt 264 auf. Dieser dient dazu, einen Durchgangsraum beispielsweise für das axiale Ende einer Abtriebswelle bereitzustellen. Auch kann an diesem ringartigen Abschnitt 264 jeweils ein zylindrischer Ansatz 266 vorgesehen sein, welcher der radialen Lagerung verschiedener Baugruppen, beispielsweise der Sekundärseite 96 bezüglich der Primärseite 76 oder aber auch der Sekundärseite 96 bezüglich einer Abtriebswelle dienen kann. In dem ringartigen Abschnitt 264 können weiterhin Öffnungen 268 gebildet sein, welche zum Durchgang von der Festlegung beispielsweise an einer Kurbelwelle dienenden Schraubbolzen oder dergleichen dienen können.

Die Fig. 46 zeigt ein Umfangsabstützelement 102, welches nur einen einzigen Umfangsabstützbereich 106 sowie einen Verbindungsbereich 110 aufweist. Im Umfangsabstützbereich 106 sind zwei Umfangsvorsprünge 270, 272 vorgesehen. Diese dienen dazu, die der Umfangsabstützung der Federelementeneinheiten 86, 88 dienenden Federteller 94 radial außen zu übergreifen und nach radial außen hin zu stützen. Somit wird die Gleitreibungswechselwirkung derselben bezüglich der Primärseite gemindert, was zu einer verbesserten Entkopplung zwischen der Primärseite 76 und der Sekundärseite 96 führt. Derartige der radialen Abstützung dienende Vorsprünge 270, 272 können selbstverständlich auch bei Umfangsabstützelementen mit zwei Umfangsabstützbereichen, wie in den Fig. 43 bis 45 gezeigt, vorgesehen sein.

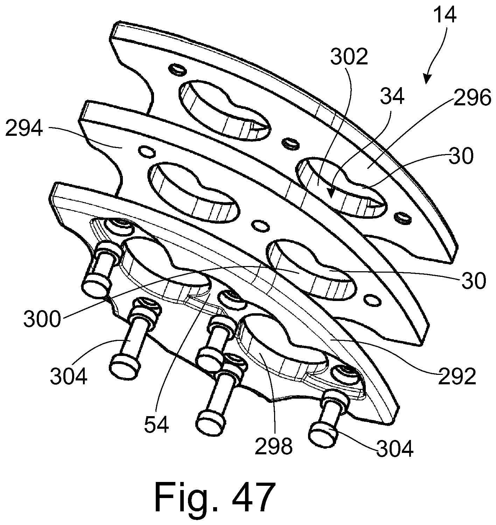

In Fig.47 ist eine Auslenkungsmasse 14 gezeigt, welche mit drei axial aufeinander folgend anzuordnenden Auslenkungsmassenteilen 292, 294 und 296 aufgebaut ist. Diese weisen einander entsprechende Umfangskonturen auf und weisen jeweils Öffnungen 30 auf, an deren radial inneren Seiten jeweils Abschnitte 298, 300, 302 einer jeweiligen ersten Führungsbahn 34 bereitgestellt sind. Mit diesen axial nebeneinander liegenden Abschnitten 298, 300, 302 tritt ein jeweiliger Außenumfangsbereich eines Führungskörpers in Kontakt.

Die feste Verbindung der drei Auslenkungsmassenteile 292, 294, 296 kann durch an mehreren Positionen vorgesehene Verbindungselemente 304, beispielsweise Nietbolzen, erfolgen. Selbstverständlich sind auch hier andere Verbindungstechniken, wie Schweißen, Kleben, Klemmen, Löten oder Schrauben möglich.

Die beiden an den axialen Endseiten positionierten Auslenkungsmassenteile 292, 296 weisen an ihren voneinander weg weisenden Seiten die Einsenkungen 54 auf, welche die an den Trägerscheiben vorgesehenen und Teile der zweiten Führungsbahnen bereitstellenden axialen Ausformungen aufnehmen können.

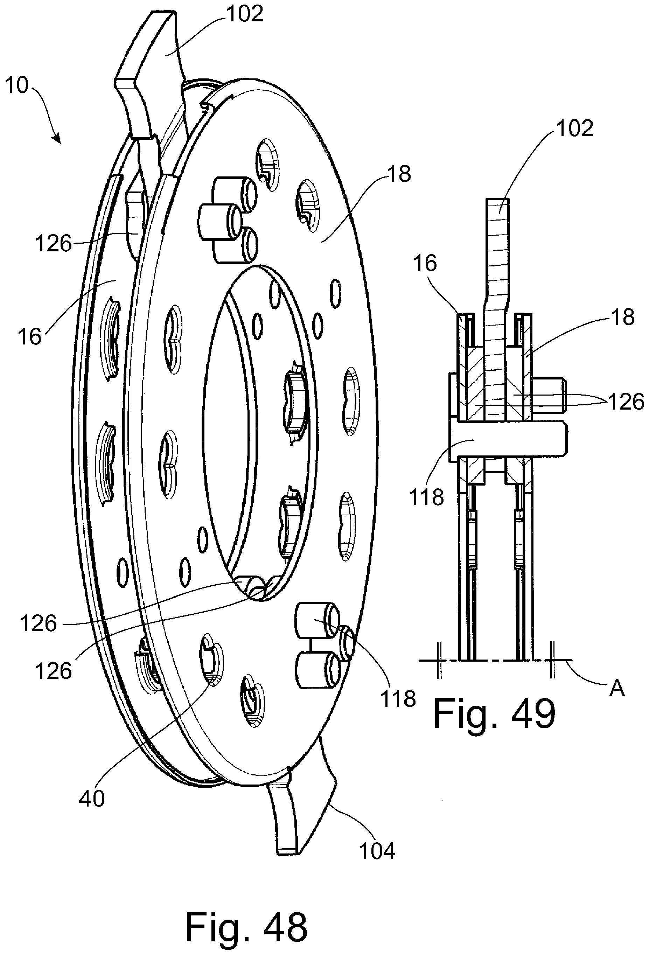

Die Fig. 48 und 49 zeigen eine Ausgestaltungsvariante, bei welcher die beiden Umfangsabstützelemente 102, 104 nicht an der von der Trägerscheibe 16 abgewandten Außenseite der Trägerscheibe 18 anliegend positioniert sind, sondern zwischen den beiden Trägerscheiben 16, 18. Da die beispielsweise aus Blechmaterial gefertigten Umfangsabstützelemente 102, 104 im Allgemeinen eine Dicke aufweisen werden, die geringer ist als der axiale Zwischenraum zwischen den beiden Trägerscheiben 16, 18, in welchem auch die Auslenkungsmassen 14 aufgenommen sind, sind beidseits der Umfangsabstützelemente 102, 104 Distanzelemente 126 vorgesehen. Durch die ersten Verbindungselemente 118, durch welche auch die feste Anbindung des sekundärseitigen Masseteils an die Umfangsabstützelemente 102, 104 erfolgt, sind die beiden Trägerscheiben 16, 18, die dazwischen liegenden Distanzelemente 126 und die zwischen den jeweiligen Distanzelementen 126 positionierten Umfangsabstützelemente 102, 104 zu einer Baugruppe zusammengefasst. Auch eine Ausgestaltung der Umfangsabstützelemente 102, 104 mit größerer Dicke kann dazu genutzt werden, zumindest eines der Distanzelemente 126 zu vermeiden.

Da bei dieser Ausgestaltungsform die Umfangsabstützelemente 102, 104 bereits axial näherungsweise mittig zwischen den beiden Trägerscheiben 16, 18 angeordnet sind, können die Umfangsabstützelemente 102, 104 im Wesentlichen planar bzw. mit einer nur geringen axialen Abkröpfung ausgebildet sein. Dies vereinfacht die Herstellung und führt zu geringeren Materialspannungen in den Umfangsabstützelementen.

Ebenso wie in den vorangehend beschriebenen Ausgestaltungsformen könnte eines der beiden Distanzelemente, insbesondere das angrenzend an die Trägerscheibe 16 positionierte Distanzelement 126, weggelassen sein und durch einen Distanzbund an den Verbindungselementen 118 ersetzt sein.

Während bei den vorangehend beschriebenen Ausgestaltungsformen die mit dem sekundärseitigen Masseteil zu verbindenden Umfangsabstützelemente durch die Positionierung an der axialen Außenseite der Trägerscheibe 16 im Wesentlichen unmittelbar angrenzend an das sekundärseitige Masseteil positioniert werden können und somit bei der Drehmomentübertragung im Wesentlichen keine zusätzliche Belastung der Bauteile der Drehschwingungsdämpfereinrichtung 10 auftritt, liegen in dem in den Fig. 48 und 49 gezeigten Beispiel die Trägerscheibe 18 und das angrenzend an diese positionierte Distanzelement 126 zwischen den Umfangsabstützelementen 102, 104 und dem in den Fig. 48 und 49 nicht gezeigten sekundärseitigen Masseteil. Dies kann auch bei Vorsehen mehrerer erster Verbindungselemente 118 in Zuordnung zu jedem Umfangsabstützelement zu einer verstärkten Pressung bei Drehmomentübertragung führen, wozu die zwischen dem sekundärseitigen Masseteil und den Umfangsabstützelementen liegenden Bauteile mit entsprechender Festigkeit auszugestalten sind.

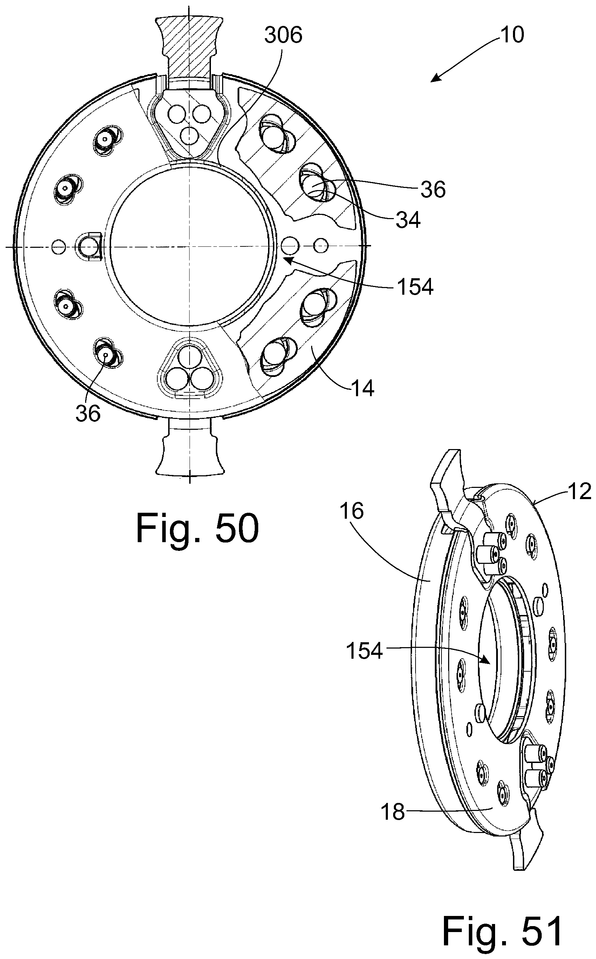

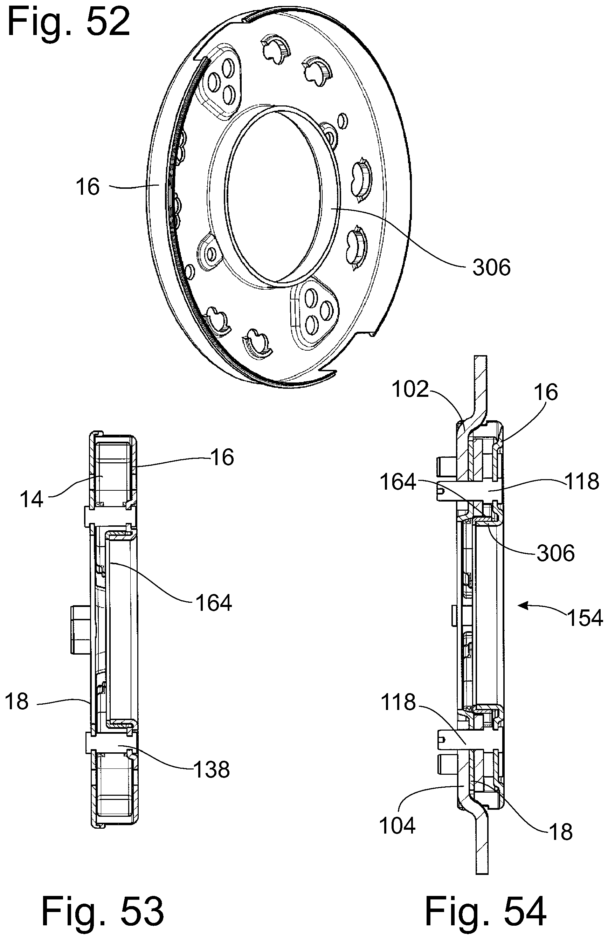

Die Fig. 50 bis 54 zeigen eine Ausgestaltungsform der Schwingungsdämpfereinrichtung 10, bei welcher die Bewegungsbegrenzungsanordnung 154 in den Auslenkungsmassenträger 12 integriert ist. Dazu weist die Trägerscheibe 16 in ihrem radial inneren Bereich einen vom scheibenartigen Bereich 20 sich axial erstreckenden, zylindrischen Bewegungsanschlag 306 auf. Dieser erstreckt sich radial innerhalb der Auslenkungsmassen 14 und kann, wie die Fig. 53 und 54 dies zeigen, das ringartige elastische Element 164 an seinem Außenumfang tragen.

Zum Bereitstellen dieses Bewegungsanschlags 306 könnte selbstverständlich auch die andere Trägerscheibe 18 entsprechend axial ausgeformt sein oder es könnten beide Trägerscheiben aufeinander zu sich erstreckende zylindrische Abschnitte aufweisen, welche zusammen den Bewegungsanschlag bereitstellen. Auch ist es denkbar, anstelle einer integralen Ausgestaltung den Bewegungsanschlag 306 beispielsweise durch Vernieten, Verschweißen oder dergleichen an zumindest einer der Trägerscheiben 16, 18 festzulegen. Zur festen Anbindung des elastischen Elements kann dieses beispielsweise aufgeschrumpft, aufgeklebt oder vulkanisiert sein. Auch das materialschlüssige Anbinden durch Spritzgießen bzw. Aufspritzen ist möglich. Bei einer weiteren alternativen Variante könnte dieser radial innerhalb der Auslenkungsmassen 14 liegende, beispielsweise ringartige Bewegungsanschlag durch den radial inneren Bereich des sekundärseitigen Masseteils bereitgestellt sein. Auch auf diesem Bereich des sekundärseitigen Masseteils könnte dann das elastische Element 164 angeordnet sein, um die Anschläge der Auslenkungsmassen zu dämpfen.

Ein Vorteil des Vorsehens des Bewegungsanschlags 306 bzw. des am Außenumfang desselben vorgesehenen ringartigen elastischen Elements 164 unmittelbar an dem Auslenkungsmassenträger 12 oder dem sekundärseitigen Masseteil 98 liegt darin, dass somit eine Anbindung an die Sekundärseite 96 der Torsionsschwingungsdämpferanordnung 74 erfolgt. Gleitende Relativbewegungen zwischen den anschlagenden Auslenkungsmassen 14 und der Bewegungsbegrenzungsanordnung 154, welche zu einem Verschleiß führen können, werden somit vermieden.

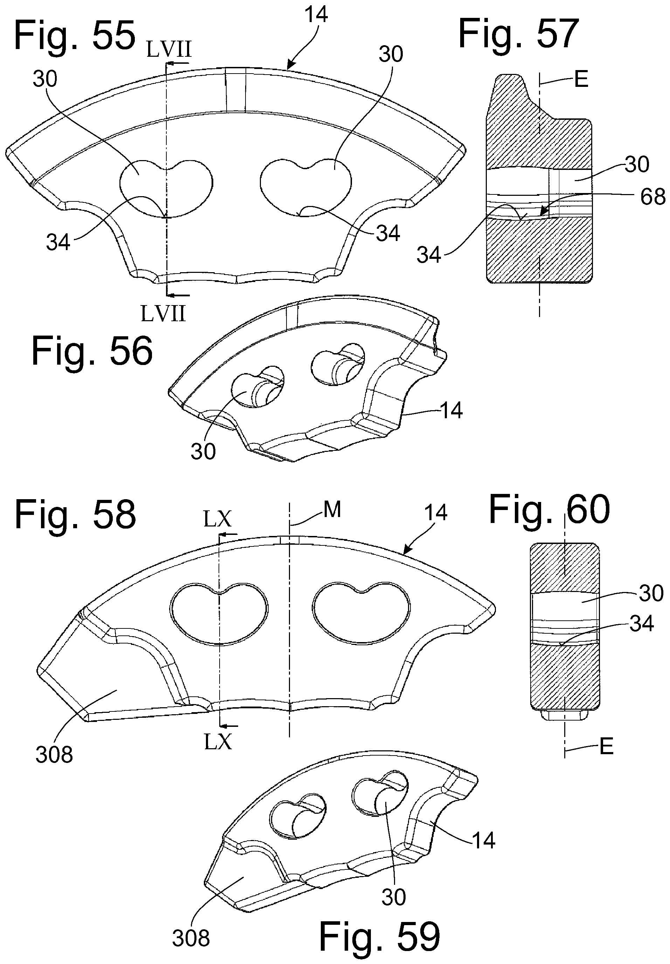

Die Fig. 55 bis 57 zeigen eine Auslenkungsmasse 14 mit zwei zur Zusammenwirkung mit Führungskörpern vorgesehenen und erste Führungsbahnen 34 bereitstellenden Öffnungen 30. Man erkennt, dass bei dieser Ausgestaltungsform die Auslenkungsmasse 14 in Achsrichtung betrachtet bezüglich einer axialen Mittenebene E nicht symmetrisch gestaltet sind. Dies bedeutet, dass der Massenschwerpunkt dieser Auslenkungsmasse 14 nicht in der axialen Mittenebene E liegt, sondern zu einer axialen Seite verschoben ist. Entsprechend sind auch die Öffnungen 30 bezüglich der Mittenebene E in Achsrichtung nicht symmetrisch. Insbesondere erkennt man, dass die zum Bereitstellen einer ersten Axialzentrieranordnung 68 hier konkav geformten ersten Führungsbahnen 34 auch axial versetzt bezüglich der axialen Mittenebene E liegen. Auf diese Art und Weise kann erreicht werden, dass die ersten Führungsbahnen 34 bzw. deren Bereich der Zusammenwirkung mit einem jeweiligen Führungskörper im Wesentlichen dort positioniert sind, wo auch der Massenschwerpunkt einer jeweiligen Auslenkungsmasse 14 liegt, so dass keine fliehkraftbedingten Kippmomente erzeugt werden.

Durch diese in Achsrichtung unsymmetrische Ausgestaltung der Auslenkungsmassen 14 wird es möglich, diese verbessert an die im Inneren des Auslenkungsmassenträgers 12 vorhandenen Platzverhältnisse anzupassen. Insbesondere wird es beispielsweise möglich, dass die Auslenkungsmassen 14 in ihrem radial äußeren Bereich in Umfangsbereiche eintauchen, in welchen die Einsenkungen 114 bzw. 116 für die Umfangsabstützelemente 102, 104 angeordnet sind.

In den Fig._58 bis 60 ist eine Auslenkungsmasse 14 gezeigt, die bezüglich einer im Wesentlichen einer Radiallinie entsprechenden Umfangsmittenlinie M unsymmetrisch ist. Insbesondere erkennt man in einem Umfangsendbereich eine Einsenkung 308, so dass in diesem Bereich eine in Achsrichtung schlankere Ausgestaltung der Auslenkungsmasse 14 erreicht ist. Auch dies gestattet das Eintauchen in Bereiche, in welchen der Abstand zwischen den beiden Trägerscheiben geringer ist.

Die Fig. 60 zeigt, dass die Öffnungen 30 bzw. die darin gebildeten ersten Führungsbahnen 34 hier bezüglich der axialen Mittenlinie E im Wesentlichen symmetrisch liegen. In Umfangsrichtung können die Öffnungen 30 bzw. die darin gebildeten ersten Führungsbahnen 34 jedoch so positioniert sein, dass auch unter Berücksichtigung der in Umfangsrichtung unsymmetrischen Gestaltung der Auslenkungsmasse 14 auf beide mit dieser zusammenwirkenden Führungskörper im Wesentlichen die gleiche Kraft ausgeübt wird. Hierzu sollte vorteilhafterweise der Massenschwerpunkt auf der Umfangsmittenlinie M bzw. auch in der axialen Mittenebene E liegen.

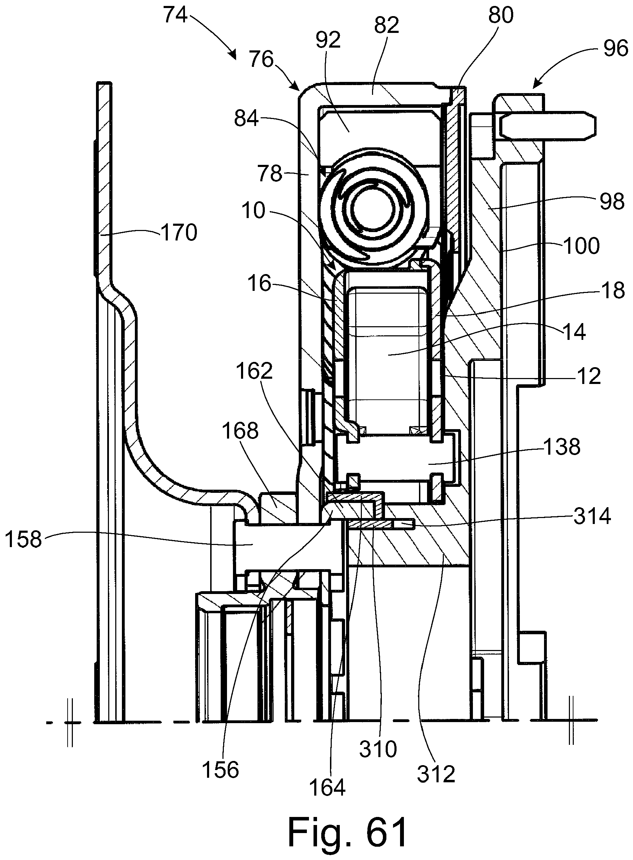

Die Fig. 61 zeigt eine Torsionsschwingungsdämpferanordnung, bei welcher der ringartige Bewegungsanschlag 156 mit seinem zylindrischen, radial sich erstreckenden Bereich 162, welcher außen auch vom elastischen Element 164 umgeben ist, eine Radialzentrierung für ein Radiallager 310 bildet. In den Innenumfangsbereich dieses Radiallagers 310 greift das sekundärseitige Masseteil 98 mit seinem radial inneren Lagerbereich 312 ein. Auf diese Art und Weise werden Primärseite 76 und Sekundärseite 96 der Torsionsschwingungsdämpferanordnung 74 radial bezüglich einander zentriert. Die Axiallagerung bzw. Abstützung erfolgt dadurch, dass der Lagerungsbereich 312 des sekundärseitigen Masseteils 98 axial an einem nach radial innen sich erstreckenden Schenkel des elastischen Elements 164 anliegt. Radial innerhalb dieses Anlagebereichs im Lagerbereich 312 ist eine axial sich erstreckende, ringartige Nut 314 gebildet, in welche das ringartige Radiallager 310 axial eingreifen kann.

Da der Lagerungsbereich 312 des sekundräseitigen Masseteils 98 hier vergleichsweise weit radial außen liegt, insbesondere in demjenigen Bereich, in welchem die die primärseitige Deckscheibe 78 mit dem Lagerring 168 und auch dem Kopplungselement 170 verbindenden Nietbolzen 158 vorgesehen sind, ist es erforderlich, diese Nietverbindung herzustellen, bevor das sekundärseitige Masseteil 98 angebunden wird. Bei Verlagerung des Lagerungsbereichs 312 noch weiter nach radial außen wird der Zugriff auf die Nietbolzen 158 wieder freigegeben, so dass diese Nietverbindung dann auch nach dem Anbinden des sekundärseitigen Masseteils 98 erfolgen kann. Auch ist es grundsätzlich denkbar, die Primärseite, also beispielsweise die Deckscheibe 78 oder den Lagerring 168 ohne Verwendung des Kopplungselements 170 bzw. einer damit zu verbindenden Flexplatte oder dergleichen unmittelbar an eine Kurbelwelle anzubinden, und zwar in einem Bereich radial innerhalb des Lagerungsbereichs 312 des sekundärseitigen Masseteils 98. Auch in diesem Falle müssten dort dann keine Öffnungen vorgesehen sein, durch welche hindurch Schraubbolzen oder dergleichen oder Werkzeuge geführt werden können.

Das beispielsweise in den Fig. 18 und 19 erkennbare Lager 172 zur Lagerung einer Abtriebswelle könnte gleichermaßen noch am Lagerungsbereich 312 des sekundärseitigen Masseteils 98 vorgesehen sein. Auch am Lagerring 168 kann diese Lagerung erfolgen, so dass die Abtriebswelle dann bezüglich der Primärseite 76 gelagert ist. Auch die Primärseite bzw. die Deckscheibe 78 derselben könnte zur Lagerung der Abtriebswelle genutzt werden.

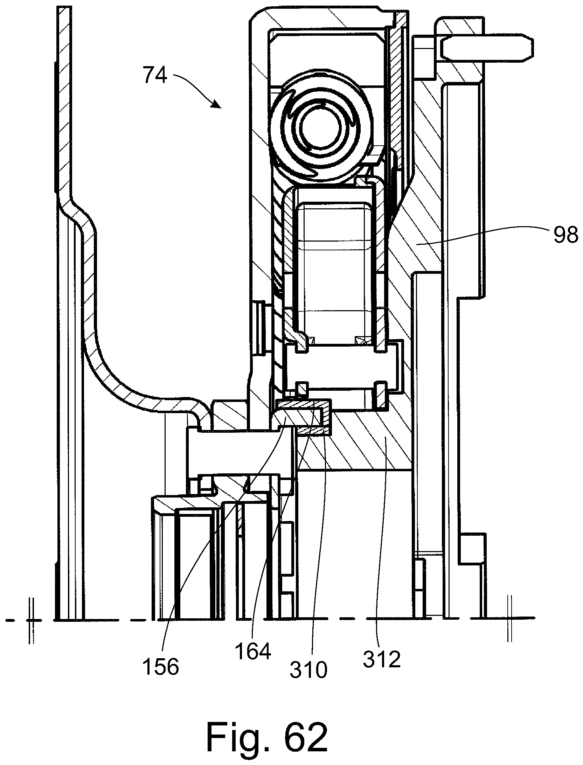

Bei der in Fig. 62 gezeigten Abwandlung der vorangehend beschriebenen Ausgestaltungsform ist erkennbar, dass dort, wo das ringartige Radiallager 310 positioniert ist, im Lagerungsbereich 312 des sekundärseitigen Masseteils 98 keine axial offene und in Umfangsrichtung sich im Wesentlichen durchgehend erstreckende Nut vorgesehen ist, was eine axial kürzere Bauweise des ringartigen Radiallagers 310 erforderlich macht.

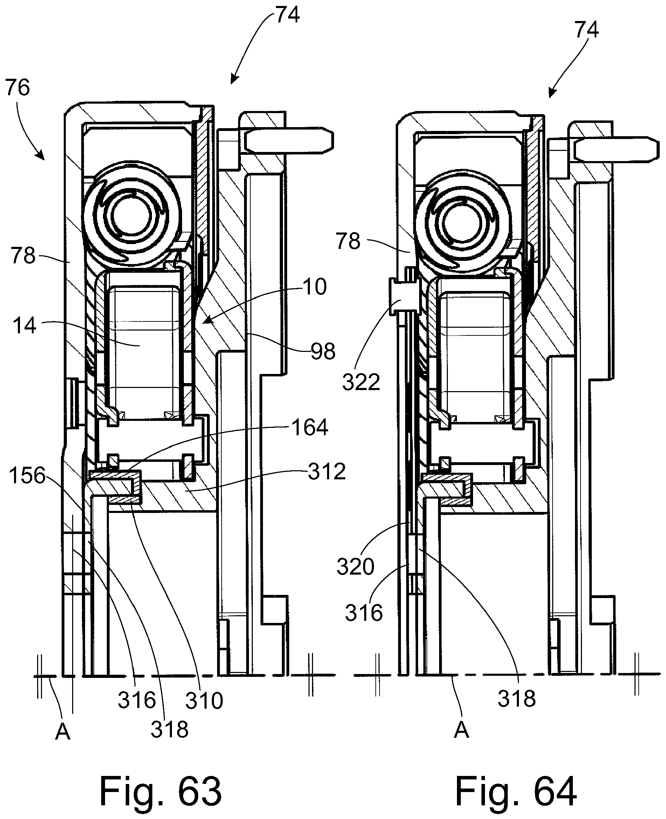

Die Fig. 63 zeigt eine Torsionsschwingungsdämpferanordnung 74, bei welcher eine Anbindung derselben im Bereich ihrer Primärseite 76 unmittelbar an eine Antriebswelle, also beispielsweise eine Kurbelwelle, erfolgt. Zu diesem Zwecke erstreckt die primärseitige Deckscheibe 78 sich nach radial innen über den radial innen liegenden Lagerungsbereich 312 des sekundärseitigen Masseteils 98 hinaus. In diesem radial inneren Bereich weist die Deckscheibe 78 und in Zuordnung dazu auch der Bewegungsanschlag 156 für die Auslenkungsmassen 14 Öffnungen 316 bzw. 318 auf, durch welche zur Festlegung dienende Schraubbolzen hindurchgeführt werden können.

Eine entsprechende Art der Anbindung ist auch bei der in Fig. 64 dargestellten Ausgestaltungsform gezeigt. Hier ist die Deckscheibe 78 in seinem radial inneren Bereich durch einen axialelastischen Teil 320 verlängert. Dieser kann durch Nietbolzen oder dergleichen an der Deckscheibe 78 festgelegt sein und weist radial innen die Öffnungen 316 zur Festlegung an einer Kurbelwelle oder einer sonstigen Antriebswelle auf.

Der elastische Teil 320 kann beispielsweise ein oder mehrere Blechelemente mit vergleichsweise geringer Dicke aufweisen, welche eine Verkippung der Deckscheibe 78 und mithin der gesamten Torsionsschwingungsdämpferanordnung 74 bezüglich der Drehachse A zulassen. Der elastische Teil 320 ist vorzugsweise ringscheibenartig ausgebildet, um die über diesen zu übertragenden Drehmomente sicher aufnehmen und weiterleiten zu können.

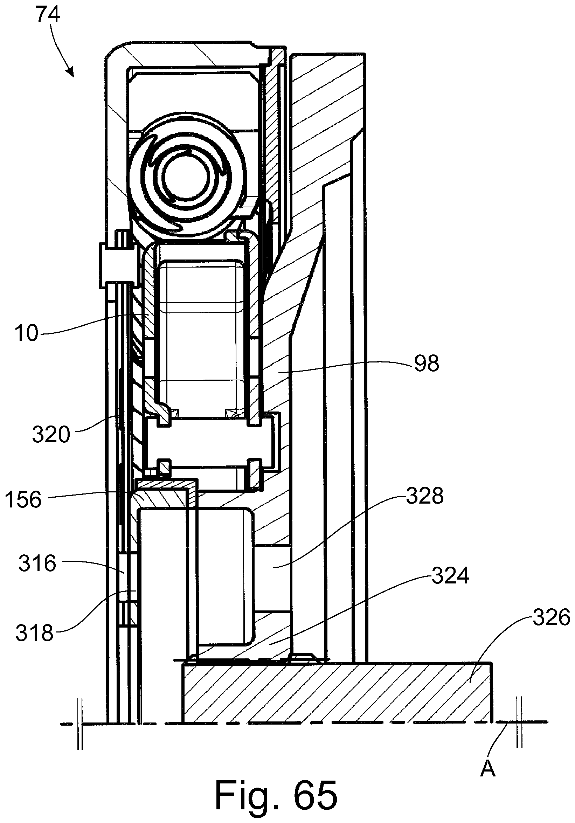

Die Fig. 65 zeigt eine Torsionsschwingungsdämpferanordnung 74, wie sie beispielsweise in Hybridantriebssystemen oder in Verbindung mit Doppelkupplungen eingesetzt werden kann. Der Gesamtaufbau der Torsionsschwingungsdämpferanordnung 74 bzw. der darin vorgesehenen Schwingungsdämpfereinrichtung 10 kann in irgendeiner der vorangehend beschriebenen Weisen erfolgen. Man erkennt jedoch, dass das sekundärseitige Masseteil 98 sich weiter nach radial innen erstreckt und einen Nabenbereich 324 mit Innenverzahnung bildet. Mit diesem kann ein mit Außenverzahnung versehener Wellenansatz 326 durch axiales Ineinandereinschieben zur gemeinsamen Drehung um die Drehachse A gekoppelt werden. Dieser Wellenansatz 326 kann zu einem weiteren Bereich eines Antriebsstrangs, also beispielsweise einer Elektromaschine oder dem Eingangsbereich einer Doppelkupplung führen. Soll diese Torsionsschwingungsdämpferanordnung 74 im Drehmomentenfluss erst nach einer Elektromaschine oder nach einer Doppelkupplung angeordnet sein, so kann der Wellenansatz 126 das axiale Ende einer Getreibeeingangswelle sein.

Man erkennt, dass in Zuordnung zu den Öffnungen 316 im elastischen Teil 320 bzw. 318 im Bewegungsanschlag 156 auch das sekundärseitige Masseteil 98 bei dieser Ausgestaltungsform Öffnungen 328 aufweist, um die zur Festlegung an einer Antriebswelle dienenden Schraubbolzen einsetzen und anziehen zu können.

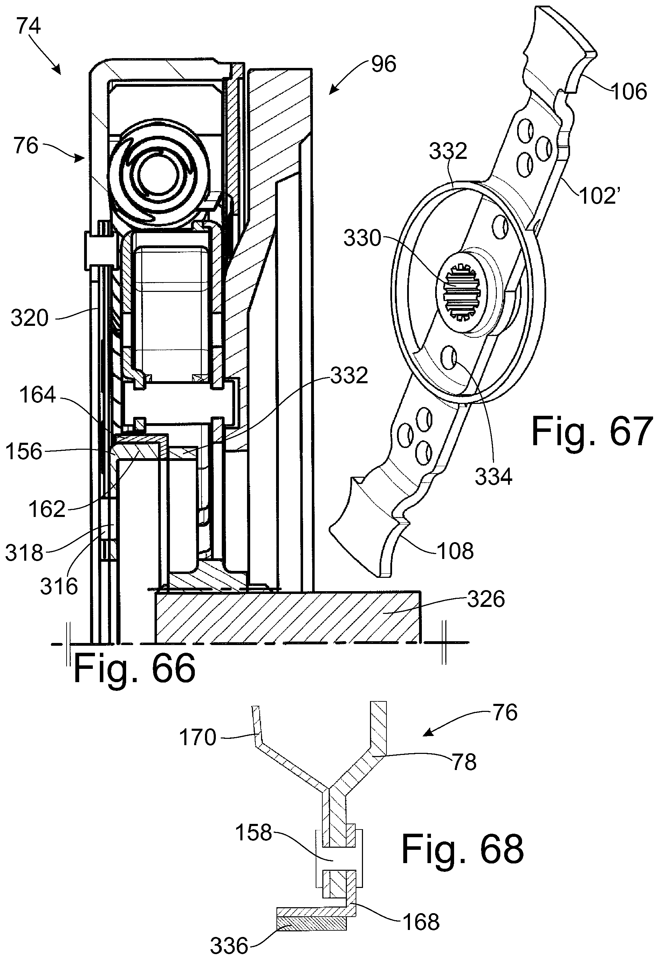

Die Fig. 66 und 67 zeigen eine Variante der Torsionsschwingungsdämpferanordnung 74, welche sich ebenfalls besonders zum Einsatz in Verbindung mit Hybridantriebssystemen oder Doppelkupplungen eignet. Man erkennt, dass hier wieder ein zwei Umfangsabstützbereiche 106, 108 aufweisendes, im Wesentlichen balkenartiges Umfangsabstützelement 102' zum Einsatz gebracht wird, das in seinem radial inneren Bereich einen mit Verzahnung versehenen Nabenbereich 330 aufweist. Ferner trägt das Umfangsabstützelement 102' einen beispielsweise integral angeformten oder aber auch separat daran festgelegten ringartigen Abstützbereich 332. Dieser liegt axial dem Bewegungsanschlag 156 bzw. dessen axial sich erstreckenden, zylindrischen Bereich 162 gegenüber, so dass ein nach radial innen sich erstreckender Schenkel des elastischen Elements 164 zwischen diesen beiden Teilen angeordnet ist. Das Umfangsabstützelement 102' und damit die gesamte Sekundärseite 96 der Torsionsschwingungsdämpferanordnung 74 stützen sich somit in Axialrichtung bezüglich der Primärseite 76 über diesen Abstützabschnitt 332 ab, so dass gleichzeitig auch bei Relativdrehung zwischen der Primärseite und der Sekundärseite eine Reibwechselwirkung erzeugt werden kann.

Entsprechend den Öffnungen 316 im elastischen Teil 320 bzw. 318 im Bewegungsanschlag 156 weist auch das Umfangsabstützelement 102' Öffnungen 334 auf, um eine Anbindung an eine Antriebswelle zu ermöglichen.

Die Fig. 68 zeigt den radial inneren Bereich einer weiteren Ausgestaltungsvariante der Primärseite 76 der Torsionsschwingungsdämpferanordnung 74. Man erkennt den radial inneren und hier axial abgekröpften Bereich der Deckscheibe 78 und auch den radial inneren Bereich des ebenfalls axial abgekröpften Kopplungselements 170. Diese sind vermittels der Nietbolzen 158 mit dem Lagerring 168 fest verbunden, wobei die Deckscheiben 78 zwischen dem Kopplungselement 170 und einem radial sich erstreckenden Schenkel des Lagerrings 168 angeordnet ist. Am Innenumfang eines axial sich erstreckenden Schenkels des Lagerrings 168 ist ein beispielsweise ringartiges Lagerelement 336 vorgesehen, welches der radialen oder/und axialen Lagerung der Primärseite 76 bezüglich einer Antriebswelle dient.

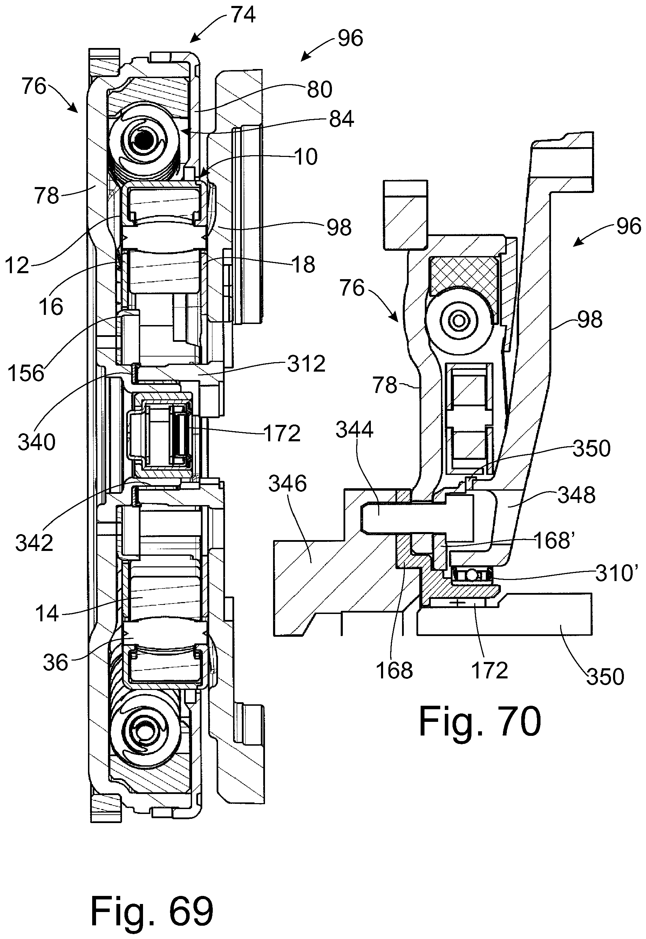

Die Fig. 69 zeigt eine weitere Variante einer Torsionsschwingungsdämpferanordnung 74, welche mit einer Schwingungsdämpfereinrichtung 10 kombiniert ist. Die Torsionsschwingungsdämpferanordnung 74 weist primärseitig wieder die beiden Deckscheiben 78, 80 und die im äußeren Bereich dazwischen aufgenommene Dämpferelementenanordnung 84 auf. Radial innen bildet die primärseitige Deckscheibe 78 einen Lageransatz 340, an welchem unter Zwischenlagerung einer Gleitlagerhülse 342 der radial innere Lagerungsbereich 312 des sekundärseitigen Masseelements 98 radial gelagert sein kann. Eine axiale Abstützung der Sekundärseite 96 bezüglich der Primärseite 76 kann in diesem Bereich erfolgen.

Die Schwingungsdämpfereinrichtung 10 kann so wie vorangehend beschrieben mit den beiden Trägerscheiben 16, 18 und den dazwischen aufgenommenen Auslenkungsmassen 14 ausgebildet sein. Diese sind jeweils über vorzugsweise mehrere Führungskörper 36 zur Umfangs- und dabei Radialverlagerung am Auslenkungsmassenträger 12 bewegbar gehalten.

Über das Wälzkörperlager 172 kann der axiale Endbereich einer Abtriebswelle, also beispielsweise Getriebeeingangswelle, bezüglich des Lageransatzes 340 des Deckscheibenelements 78 gelagert sein.

Bei der in Fig. 70 gezeigten Ausgestaltungsform ist die Deckscheibe 78 der Primärseite 76 durch Schraubbolzen 344 an einer Antriebswelle 346, also beispielsweise einer Kurbelwelle, festgelegt. Hierzu weist das sekundärseitige Masseteil 98 in seinem radial inneren Bereich Durchgriffsöffnungen 348 auf. Zusammen mit der Deckscheibe 78 sind vermittels der Schraubbolzen 344 zwei Lagerringe 168 und 168' an der Antriebswelle 346 festgelegt. Der Lagerring 368 erstreckt sich weiter nach radial innen und dient unter Zwischenlagerung des beispielsweise wieder mit Wälzkörpern ausgeführten Lagers 172 der Zentrierung eines axialen Endes einer Abtriebswelle 350. Weiterhin ist unter Zwischenanordnung eines hier beispielsweise mit Wälzkörpern ausgeführten Radiallagers 310 die Sekundärseite 96 bezüglich der Primärseite 76 radial gelagert.

Der Lagerring 168' erstreckt sich ausgehend von der Festlegung vermittels der Schraubbolzen 344 in seinem radial äußeren Bereich axial auf das sekundärseitige Masseteil 98 zu und stützt dieses unter Zwischenlagerung eines beispielsweise als Gleitlager ausgeführten Axiallagers 350. Dieses Axiallager 350 dient primär dazu, ein Verkippen der Sekundärseite 96 bei Ausüben einer Betätigungskraft auf einer damit verbundenen Reibungskupplung zu verhindern.

Es sei abschließend noch einmal darauf hingewiesen, dass die vorangehend beschriebenen verschiedensten Aspekte bei der Ausgestaltung der Schwingungsdämpfereinrichtung 10 einerseits und der Torsionsschwingungsdämpferanordnung 74 andererseits beliebig miteinander kombiniert werden können. Insbesondere sei darauf hingewiesen, dass in verschiedensten Bereichen auch vorangehend nicht detailliert erläuterte Variationen oder Ausführungen vorgenommen werden können. So können beispielsweise die Auslenkungsmassen in vielfältiger Weise hergestellt werden. Besonders vorteilhaft ist das Herstellen durch Sintern, da dies zu einer sehr hohen Dichte und mithin einer sehr hohen Masse führt, da schwerere Elemente in den Sinterverbund eingebracht werden können. Beispielsweise kann in eine als Grundstoff dienende Stahlmatrix Kupfer, Wolfram oder ein anderes Element hoher Dichte eingebracht werden.

Die verschiedenen dargestellten Verbindungselemente, welche vorteilhafterweise als Nietelemente ausgeführt sind, können selbstverständlich auch in anderer Formgebung bzw. mit anderer Anzahl vorgesehen sein. Als besonders vorteilhaft haben sich die in Zuordnung zu den verschiedenen Umfangsabstützelementen gezeigten Dreierpakete von Nietelementen erwiesen, die in Dreieckskonfiguration angeordnet sind, da dies eine besonders spannungsarme Verbindung mit sich bringt. Grundsätzlich sind hier jedoch auch zweier, vierer, fünfer, sechser oder noch höherzahlige Pakete möglich, wobei auch der Abstand zwischen den einzelnen Verbindungselementen in einem derartigen Paket variiert werden kann. Ebenso ist eine Anordnung der Verbindungselemente auf einem Teilkreis, also mit näherungsweise gleichem Radialabstand zur Drehachse, möglich.

Die im Rotationsbetrieb durch die einwirkende Fliehkraft besonders belasteten Bereiche insbesondere der Schwingungsdämpfereinrichtung, also die die verschiedenen Führungsbahnen bereitstellenden Bauteile bzw. auch die Führungskörper sind vorzugsweise aus gehärtetem Metall, wie beispielsweise gehärtetem Stahl, aufgebaut. Dort, wo zum Einbringen von Verbindungselementen Öffnungen vorhanden sind, ist vorzugsweise eine zum Bereitstellen einer hohen Zugfestigkeit führende Vergütung des Aufbaumaterials realisiert.

Selbstverständlich kann auch die Anzahl der bei der Schwingungsdämpfereinrichtung eingesetzten Auslenkungsmassen bezüglich der dargestellten vier Auslenkungsmassen variiert werden. So können beispielsweise auch zwei, drei, fünf, sechs oder mehr Auslenkungsmassen vorgesehen werden, wobei eine symmetrische Anordnung um die Drehachse vorteilhaft ist.

Während vorangehend Ausführungsformen dargestellt bzw. beschrieben wurden, bei welchen die einzelnen Auslenkungsmassen zueinander gleich sind, ist es selbstverständlich auch möglich, in einer Schwingungsdämpfereinrichtung Auslenkungsmassen unterschiedlicher Formgebung bzw. unterschiedlicher Masse einzusetzen. Auch können die verschiedenen Auslenkungsmassen zugeordneten Führungsbahnen unterschiedliche Gestalt aufweisen, so dass eine Abstimmung verschiedener Auslenkungsmassen auf verschiedene Anregungsordnungen vorgenommen werden kann. Auch ist es zum Vermeiden eines übermäßigen Anschlagens der Auslenkungsmassen bei zu starker Schwingungsanregung vorteilhaft, diese nicht exakt auf eine jeweils anregende Ordnung, beispielsweise die zweite Ordnung bei einem Vierzylindermotor vorzusehen. Um hier eine zu einer begrenzteren Auslenkung führende "Verstimmung" einzuführen, könnte beispielsweise eine Abstimmung auf das 2,1-Fache oder das 1,9-Fache der anregenden Frequenz erfolgen.

Durch die Formgebung, also Krümmung der Führungsbahnen wird es weiterhin möglich, einerseits die Abstimmung auf eine bestimmte anregende Ordnung zu beeinflussen, andererseits aber auch eine übermäßige Auslenkung zu vermeiden. So kann insbesondere durch das Annähern der Führungsbahnen an Radiallinien im Bereich der Führungsbahnenden eine vergleichsweise starke Abbremsung der Auslenkungsmassen erzielt werden. Flacher gestaltete Führungsbahnen führen zu weniger starken Abbremseffekten bei der Auslenkung der Auslenkungsmassen.

## Patentansprüche

1. Torsionsschwingungsdämpferanordnung für den Antriebsstrang eines Fahrzeugs, umfassend eine mit einem Antriebsorgan zu koppelnde Primärseite (76) und eine gegen die Wirkung einer Dämpferelementenanodnung (84) um eine Drehachse (A) bezüglich der Primärseite (76) drehbare Sekundärseite (96), wobei die Primärseite (76) und die Sekundärseite (96) Umfangsabstützbereiche (106, 108) für Dämpferelemente (86) der Dämpferelementenanordnung (82) aufweisen, wobei an der Sekundärseite (96) eine Schwingungsdämpfereinrichtung (10) mit einem Auslenkungsmassenträger (12) und wenigstens einer an dem Auslenkungsmassenträger (12) aus einer Grundlage mit maximalem Abstand zur Drehachse (A) in eine Auslenkungslage mit geringerem Abstand zur Drehachse (A) auslenkbar getragenen Auslenkungsmasse (14) vorgesehen ist, wobei die Sekundärseite (76) wenigstens ein Umfangsabstützbereiche (106, 108) aufweisendes Umfangsabstützelement (102') und ein sekundärseitiges, vorzugsweise ringscheibenartiges, Masseelement (98) aufweist, und wobei der Auslenkungsmassenträger (12) zwei in Richtung der Drehachse (A) in Abstand zueinander angeordnete, miteinander fest verbundene und zwischen sich die wenigstens eine Auslenkungsmasse (14) aufnehmende Trägerscheiben (16, 18) umfasst,
**dadurch gekennzeichnet,**
**dass** erste Verbindungselemente (118) vorgesehen sind, durch welche das sekundärseitige Masseelement (98) mit dem wenigstens einen Umfangsabstützelement (102') einerseits und dem Auslenkungsmassenträger (12) andererseits verbunden ist, und ein zwei Umfangsabstützbereiche (106, 108) aufweisendes Umfangsabstützelement (102') vorgesehen ist, bei welchem die Umfangsabstützbereiche (106, 108) in einem Winkelabstand von näherungsweise 180° zueinander angeordnet sind, wobei das Umfangsabstützelement (102') balkenartig ausgestaltet ist, und in dem Umfangsabstützelement (102') Öffnungen (268; 334) ausgebildet sind, welche zum Durchgang von der Festlegung beispielsweise an einer Kurbelwelle dienenden Schraubbolzen oder dergleichen dienen.

2. Torsionsschwingungsdämpferanordnung nach Anspruch 1,
**dadurch gekennzeichnet, dass** das Umfangsabstützelement (102') in seinem radial inneren Bereich einen mit Verzahnung versehenen Nabenbereich (330) aufweist.

3. Torsionsschwingungsdämpferanordnung nach Anspruch 1,
**dadurch gekennzeichnet, dass** das Umfangsabstützelement (102') einen ringartigen Abschnitt (264) aufweist, an welchem ein zylindrischer Ansatz (266) vorgesehen ist, welcher der radialen Lagerung verschiedener Baugruppen, wie der Sekundärseite (96) bezüglich der Primärseite (76) oder der Sekundärseite bezüglich einer Abtriebswelle dient.

4. Torsionsschwingungsdämpferanordnung nach Anspruch 1,
**dadurch gekennzeichnet, dass** das Umfangsabstützelement (102') einen integral angeformten oder aber separat festgelegten Abstützbereich (332) aufweist, über welchen sich die Sekundärseite (96) in Axialrichtung bezüglich der Primärseite (76) abstützt.

5. Torsionsschwingungsdämpferanordnung nach Anspruch 1,
**dadurch gekennzeichnet, dass** in Zuordnung zu jedem Umfangsabstützbereich (106, 108) eine Mehrzahl erster Verbindungselemente (118) vorgesehen ist.

6. Torsionsschwingungsdämpferanordnung nach Anspruch 5,
**dadurch gekennzeichnet, dass** die ersten Verbindunselemente (118) als Nietbolzen ausgebildet sind.

7. Torsionsschwingungsdämpferanordnung nach Anspruch 1,
**dadurch gekennzeichnet, dass** an der wenigstens einen Auslenkungsmasse (14) wenigstens eine erste Führungsbahn (34) mit einer im Wesentlichen nach radial außen gerichteten Führungsfläche (32) und in Zuordnung zu der wenigstens einen ersten Führungsbahn (34) in der wenigstens einen Auslenkungsmasse (14) im Auslenkungsmassenträger (12) eine zweite Führungsbahn (40) mit einer im Wesentlichen nach radial innen gerichteten Führungsfläche vorgesehen sind, wobei ein vorzugsweise als Rollkörper ausgebildeter Führungskörper (36) bei Auslenkung der wenigstens einen Auslenkungsmasse (14) aus der Grundlage entlang der ersten Führungsbahn (34) und der zweiten Führungsbahn (40) bewegbar ist.

8. Torsionsschwingungsdämpferanordnung nach Anspruch 7,
**dadurch gekennzeichnet, dass** wenigstens eine der Trägerscheiben (16, 18) durch erste Verbindungselemente (118) mit wenigstens einem Umfangsabstützelement (102') und dem sekundärseitigen Masseteil (98) fest verbunden ist.

9. Torsionsschwingungsdämpferanordnung nach Anspruch 8,
**dadurch gekennzeichnet, dass** die Primärseite (76) in Zuordnung zu den ersten Verbindungselementen Aussparungen (146) aufweist.

10. Torsionsschwingungsdämpferanordnung nach einem der Ansprüche 7 bis 9,
**dadurch gekennzeichnet, dass** die Trägerscheiben (16, 18) durch zweite Verbindungselemente (138), vorzugsweise Nietbolzen, vorzugsweise an in Umfangsrichtung bezüglich der ersten Verbindungselemente (118) in Abstand liegenden Positionen, miteinander fest verbunden sind.

11. Torsionsschwingungsdämpferanordnung nach einem der Ansprüche 7 bis 9,
**dadurch gekennzeichnet, dass** wenigstens ein Umfangsabstützelement (102') an einer von der anderen Trägerscheibe (16) abgewandten Außenseite der einen Trägerscheibe (18) angeordnet ist.

12. Torsionsschwingungsdämpferanordnung nach Anspruch 11,
**dadurch gekennzeichnet, dass** die eine Trägerscheibe (18) eine auf die andere Trägerscheibe (16) zu gerichtete Einsenkung (114, 116) zur Aufnahme wenigstens eines Umfangsabstützelements (102') aufweist.

13. Torsionsschwingungsdämpferanordnung nach Anspruch 1,
**dadurch gekennzeichnet, dass** die Primärseite (76) Taumelbewegungen bezüglich der Drehachse (A) zulassend ausgebildet ist oder/und mit einem Taumelbewegungen zulassenden Kopplungselement zur Ankopplung an ein Antriebsorgan (346) verbunden ist.

## Claims

1. Torsion vibration damper arrangement for the drive train of a vehicle, comprising a primary side (76) to be coupled to a drive member and a secondary side (96) which can be rotated about an axis of rotation (A) with respect to the primary side (76) against the action of a damper element arrangement (84), wherein the primary side (76) and the secondary side (96) have circumferential support regions (106, 108) for damper elements (86) of the damper element arrangement (82), wherein there is provided on the secondary side (96) a vibration damper device (10) with a deflection mass carrier (12) and with at least one deflection mass (14) which is carried on the deflection mass carrier (12) so as to be able to be deflected from a basic position with a maximum distance from the axis of rotation (A) into a deflection position with a smaller distance from the axis of rotation (A), wherein the secondary side (76) has at least one circumferential support element (102'), which has circumferential support regions (106, 108), and a secondary-side, preferably annular disc-like, mass element (98), and wherein the deflection mass carrier (12) comprises two carrier discs (16, 18) which are arranged at a distance from one another in the direction of the axis of rotation (A), are fixedly connected to one another and receive between them the at least one deflection mass (14),
**characterized**
**in that** first connecting elements (118) are provided by means of which the secondary-side mass element (98) is connected to the at least one circumferential support element (102') on the one hand and to the deflection mass carrier (12) on the other hand, and a circumferential support element (102') having two circumferential support regions (106, 108) is provided in which the circumferential support regions (106, 108) are arranged at an angular distance of approximately 180° with respect to one another, wherein the circumferential support element (102') is of beam-like design, and openings (268; 334) are formed in the circumferential support element (102'), which openings serve for the passage of screw bolts or the like which serve for fastening to a crankshaft, for example.

2. Torsion vibration damper arrangement according to Claim 1,
**characterized in that** the circumferential support element (102') has, in its radially inner region, a hub region (330) provided with a toothing.

3. Torsion vibration damper arrangement according to Claim 1,
**characterized in that** the circumferential support element (102') has an annular portion (264) on which there is provided a cylindrical attachment (266) which serves for the radial mounting of different assemblies, such as of the secondary side (96) with respect to the primary side (76) or of the secondary side with respect to an output shaft.

4. Torsion vibration damper arrangement according to Claim 1,
**characterized in that** the circumferential support element (102') has an integrally formed or else separately fastened support region (332) via which the secondary side (96) is supported in the axial direction with respect to the primary side (76).

5. Torsion vibration damper arrangement according to Claim 1,
**characterized in that** a plurality of first connecting elements (118) are provided in association with each circumferential support region (106, 108).

6. Torsion vibration damper arrangement according to Claim 5,
**characterized in that** the first connecting elements (118) are designed as rivet bolts.

7. Torsion vibration damper arrangement according to Claim 1,
**characterized in that** at least one first guide path (34) with a substantially radially outwardly directed guide surface (32) is provided on the at least one deflection mass (14) and, in association with the at least one first guide path (34) in the at least one deflection mass (14), a second guide path (40) with a substantially radially inwardly directed guide surface is provided in the deflection mass carrier (12), wherein a guide body (36) preferably designed as a rolling body can be moved from the basic position along the first guide path (34) and the second guide path (40) upon deflection of the at least one deflection mass (14).

8. Torsion vibration damper arrangement according to Claim 7,
**characterized in that** at least one of the carrier discs (16, 18) is fixedly connected to at least one circumferential support element (102') and the secondary-side mass part (98) by means of first connecting elements (118).

9. Torsion vibration damper arrangement according to Claim 8,
**characterized in that** the primary side (76) has cutouts (146) in association with the first connecting elements.

10. Torsion vibration damper arrangement according to one of Claims 7 to 9,
**characterized in that** the carrier discs (16, 18) are fixedly connected to one another by means of second connecting elements (138), preferably rivet bolts, preferably at positions situated at a distance in the circumferential direction with respect to the first connecting elements (118).

11. Torsion vibration damper arrangement according to one of Claims 7 to 9,
**characterized in that** at least one circumferential support element (102') is arranged on an outer side of the one carrier disc (18) that faces away from the other carrier disc (16).

12. Torsion vibration damper arrangement according to Claim 11,
**characterized in that** the one carrier disc (18) has a depression (114, 116) directed towards the other carrier disc (16) and intended for receiving at least one circumferential support element (102').

13. Torsion vibration damper arrangement according to Claim 1,
**characterized in that** the primary side (76) is designed to allow tumbling movements with respect to the axis of rotation (A) and/or is connected to a coupling element, which allows tumbling movements, for coupling to a drive member (346).

## Revendications

1. Agencement amortisseur de vibrations torsionnelles pour la chaîne cinématique d'un véhicule, comprenant un côté principal (76) à coupler à un organe d'entraînement et un côté secondaire (96) pouvant tourner contre l'action d'un agencement d'élément amortisseur (84) autour d'un axe de rotation (A) par rapport au côté principal (76), le côté principal (76) et le côté secondaire (96) comportant des zones de maintien périphériques (106, 108) pour les éléments amortisseurs (86) de l'agencement d'élément amortisseur (82), un dispositif amortisseur de vibrations (10) étant pourvu au niveau du côté secondaire (96) d'un support de masse de déviation (12) et d'au moins une masse de déviation (14) supportée de façon à pouvoir être déviée au niveau du support de masse de déviation (12) d'une position de base avec une distance maximale par rapport à l'axe de rotation (A) jusque dans une position de déviation avec une distance plus réduite par rapport à l'axe de rotation (A), le côté secondaire (76) comportant au moins un élément de maintien périphérique (102') comportant des zones de maintien périphériques (106, 108) et un élément de masse (98) situé du côté secondaire, de préférence de type disque annulaire, et le support de masse de déviation (12) comprenant deux disques de support (16, 18) disposés à une certaine distance l'un de l'autre en direction de l'axe de rotation (A), reliés fixement entre eux et logeant entre eux l'au moins une masse de déviation (14) ;
**caractérisé en ce que** :
les premiers éléments de liaison (118) sont prévus à travers lesquels l'élément de masse (98) de côté secondaire est relié à au moins un élément de maintien périphérique (102') d'une part et au support de masse de déviation (12) d'autre part et un élément de maintien périphérique (102') comportant deux zones de maintien périphériques (106, 108) étant prévu, dans lequel les zones de maintien périphériques (106, 108) sont disposées l'une par rapport à l'autre selon un écartement angulaire d'approximativement 180°, l'élément de maintien périphérique (102') étant configuré en forme de poutre et des ouvertures (268 ; 334) étant réalisées dans l'élément de maintien périphérique (102'), ces ouvertures servant au passage de la fixation par exemple à des boulons de vis servant de vilebrequin.

2. Agencement amortisseur de vibrations torsionnelles selon la revendication 1, **caractérisé en ce que** l'élément de maintien périphérique (102') comporte dans sa zone intérieure dans le plan radial une zone de moyeu (330) pourvue d'un endentement.

3. Agencement amortisseur de vibrations torsionnelles selon la revendication 1, **caractérisé en ce que** l'élément de maintien périphérique (102') comporte une section (264) de type annulaire au niveau de laquelle un appendice (266) cylindrique est prévu, cet appendice servant au positionnement radial de différents modules de construction, par exemple au positionnement du côté secondaire (96) par rapport au côté principal (76) ou au positionnement du côté secondaire par rapport à un arbre d'entraînement en sortie.

4. Agencement amortisseur de vibrations torsionnelles selon la revendication 1, **caractérisé en ce que** l'élément de maintien périphérique (102') comporte une zone de maintien (332) intégralement moulée contre l'élément ou fixée séparément via laquelle le côté secondaire (96) bute dans la direction axiale contre le côté principal (76).

5. Agencement amortisseur de vibrations torsionnelles selon la revendication 1, **caractérisé en ce qu'**une pluralité de premiers éléments de liaison (118) est prévue en association à chaque zone de maintien périphérique (106, 108).

6. Agencement amortisseur de vibrations torsionnelles selon la revendication 5, **caractérisé en ce que** les premiers éléments de liaison (118) sont réalisés sous la forme de boulons rivetés.

7. Agencement amortisseur de vibrations torsionnelles selon la revendication 1, **caractérisé en ce qu'**au moins un premier couloir de guidage (34) situé au niveau de l'au moins une masse de déviation (14) est pourvu d'une surface de guidage (32) pour l'essentiel orientée vers l'extérieur dans le plan radial et qu'un deuxième couloir de guidage (40) associé à l'au moins un premier couloir de guidage (34) dans l'au moins une masse de déviation (14) dans le support de masse de déviation (12) est pourvu d'une surface de guidage orientée pour l'essentiel vers l'intérieur dans le plan radial, un corps de guidage (36) de préférence réalisé sous la forme d'un corps de rouleau pouvant être déplacé pour la déviation de l'au moins une masse de déviation (14) hors de la position de base le long du premier couloir de guidage (34) et du deuxième couloir de guidage (40).

8. Agencement amortisseur de vibrations torsionnelles selon la revendication 7, **caractérisé en ce qu'**au moins un des disques de support (16, 18) est relié fixement par le biais des premiers éléments de liaison (118) à au moins un élément de maintien périphérique (102') et à la partie de masse (98) du côté secondaire.

9. Agencement amortisseur de vibrations torsionnelles selon la revendication 8, **caractérisé en ce que** le côté principal (76) comporte des évidements (146) associés aux premiers éléments de liaison.

10. Agencement amortisseur de vibrations torsionnelles selon l'une quelconque des revendications 7 à 9, **caractérisé en ce que** les disques de support (16, 18) sont reliés fixement entre eux par le biais de deuxièmes éléments de liaison (138), de préférence de boulons rivetés, de préférence dans des positions situées à une certaine distance les unes des autres dans la direction périphérique par rapport aux premiers éléments de liaison (118).

11. Agencement amortisseur de vibrations torsionnelles selon l'une quelconque des revendications 7 à 9, **caractérisé en ce qu'**au moins un élément de maintien périphérique (102') est disposé au niveau d'un côté extérieur opposé, par rapport à l'autre disque de support (16), du premier disque de support (18).

12. Agencement amortisseur de vibrations torsionnelles selon la revendication 11, **caractérisé en ce que** le premier disque de support (18) comporte un affaissement (114, 116) orienté vers l'autre disque de support (16) pour loger au moins un élément de maintien périphérique (102').

13. Agencement amortisseur de vibrations torsionnelles selon la revendication 1, **caractérisé en ce que** le côté principal (76) est réalisé de façon à admettre des culbutages par rapport à l'axe de rotation (A) et/ou est relié à un élément de couplage admettant des culbutages pour le couplage à un organe d'entraînement (346) .
